# EUROPÄISCHE PATENTSCHRIFT

(11) **EP 1 010 703 B1**
(45) Veröffentlichungstag und Bekanntmachung des Hinweises auf die Patenterteilung: **25.02.2004**
(21) Anmeldenummer: 99124079.7
(22) Anmeldetag: 10.12.1999
(51) Int. Cl.: C07F 5/02, C07F 1/02, C07F 7/08, C07C 25/13, C07B 37/04, B01J 19/24

(54) **Verfahren zur Herstellung Arylmetallverbindungen und deren Umsetzung mit Elektrophilen**
Process for preparing aryl metal compounds and their conversion with electrophiles
Procédé de préparation de composés metalliques d'aryl ortho substitués et leur conversion avec des électrophiles

(30) Priorität: 19.12.1998 DE 19858856
(43) Veröffentlichungstag der Anmeldung: 21.06.2000
(73) Patentinhaber: MERCK PATENT GmbH, 64293 Darmstadt (DE)
(72) Erfinder: Reiffenrath, Volker, 64380 Rossdorf (DE); Stiasny, Christian, Dr., 64347 Griesheim (DE)

(56) Entgegenhaltungen:
- EP-A- 0 552 645
- EP-A- 1 010 702
- US-A- 5 087 764

## Beschreibung

Die Erfindung betrifft ein Verfahren zur Herstellung von Arylmetallverbindungen durch Deprotonierung von Aromaten, die ein Wasserstoffatom in ortho-Position zu einem Halogenatom oder einer Trifluormethoxy-Gruppe aufweisen, mit einer geeigneten Base oder durch Halogen-Metall-Austausch von Halogenaromaten mit einem geeigneten Metallierungsreagenz und deren Umsetzung mit Elektrophilen, dadurch gekennzeichnet, daß man die Arylmetallverbindungen in einem Durchfluß-Reaktor herstellt.

Substituierte Aromaten stellen wertvolle Zwischenprodukte zur Synthese von hochveredelten Endprodukten bzw. selbst solche Endprodukte für die Elektronik-Industrie, wie z. B. Flüssigkristalle, für den Pflanzenschutz, wie z. B. Pestizide oder zur Herstellung von pharmazeutischen hochwirksamen Substanzen, wie z. B. Dopamin-Rezeptor-Blocker, Antiemetika oder Antipsychotika, dar.

Dies gilt insbesondere für Aromaten, die in ortho-Stellung zu einem Halogen-Atom oder einer Trifluormethoxy-Gruppe substituiert sind.

Verschiedene Wege zur Herstellung solcher Verbindungen sind in der Literatur beschrieben.

So erhält man z. B. bei der von D. L. Ladd in J. Org. Chem. 46, 203 (1981) beschriebenen Metallierung von 1,4-Difluorbenzol mit Butyllithium bei < -65 °C 1-Lithium-2,5-difluorbenzol, das bei gleicher (tiefer) Temperatur mit Trimethylborat zu 2,5-Difluorbenzolboronsäuredimethylester umgesetzt wird (Schema 1).

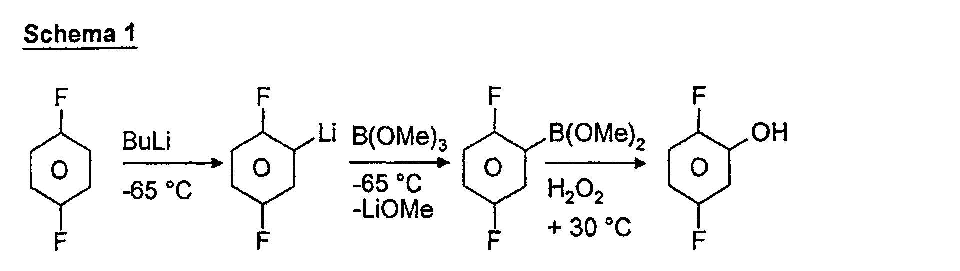

Aus dem Boronat entsteht durch Oxidation mit Wasserstoffperoxid das entsprechende Phenol.

Diese Reaktionsfolge wird auch in der WO 89/2425 zur Herstellung des 2,3-Difluorphenols beschrieben, wobei die Reaktionstemperaturen nicht und die Reaktionsbedingungen nur wenig geändert sind (Schema 2).

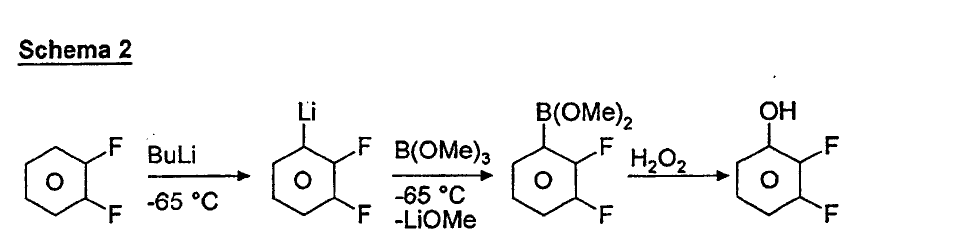

Weiterhin wird in der WO 89/2425 die Herstellung von flüssigkristallinen 2,3- bzw. 2',3'-Difluor-p-terphenylen ausgehend von 1,2-Difluorbenzol beschrieben. In der WO 89/8629 ist die Darstellung von weiteren anderen flüssigkristallinen Verbindungen, welche eine 2,3-Difluor-1,4-phenylengruppe aufweisen, beschrieben. In den dort beschriebenen Verfahren wird das 1,2-Difluorbenzol bzw. 1-substituiertes-2,3-Difluorbenzol mit einer starken Base, in der Regel mit n-Butyllithium deprotoniert und die erhaltene 2,3-Difluorphenyllithiumverbindung mit einem Elektrophil umgesetzt.

Weiterhin kann man die o-Fluorphenyl-Derivate aus den entsprechenden o-Fluorbrombenzolen durch Umsetzung mit Magnesium zu o-Fluorphenylmagnesiumbromid und anschließende Derivatisierung herstellen (z.B. EP 02 38 272). Auch hier ist es unumgänglich, bei tiefen Temperaturen zu arbeiten.

Analog zu den ortho-Fluorarylmetallverbindungen sind auch andere ortho-Halogenarylmetallverbindungen durch den Einsatz von ortho-ständigem Wasserstoff mit Hilfe einer Base bei sehr niedrigen Temperaturen erhältlich (z. B. Houben-Weyl, Methoden der organischen Chemie, Bd. 13/1, 122-123, Stuttgart 1970).

Nach DE 42 19 281 können auch solche Wasserstoff-Atome ersetzt werden, die sich in ortho-Position zu einer Trifluormethoxy-Gruppe befinden. Vorraussetzung ist bei diesem Verfahren ebenfalls die Einhaltung sehr tiefer Temperaturen.

Neben der Möglichkeit, die Arylmetallverbindungen durch Deprotonierung zu erhalten, kann ebenfalls der Halogen-Metall-Austausch mit einem geeigneten Metallierungsreagenz dazu genutzt werden, die gewünschten Verbindungen herzustellen (z. B. Houben-Weyl, Methoden der organischen Chemie, Bd. 13/1, 152-156, Stuttgart 1970 und Bd. 13/2a, 172-173, Stuttgart 1973). Insbesondere wenn es sich um in ortho-Stellung halogenierte oder um in dieser Position durch die Trimethoxy-Gruppe substituierte Arylmetallverbindungen handelt, muß auch beim Halogen-Metall-Austausch und bei der weiteren Umsetzung mit Elektrophilen auf die Einhaltung sehr tiefer Temperaturen geachtet werden.

Der Grund für die tiefen Reaktionstemperaturen liegt in der geringen Stabilität der ortho-Halogenarylmetallverbindungen.

Beispielsweise spalten 2,3-Difluorphenyllithium-Derivate oberhalb -50 °C Lithiumfluorid ab, wobei 1-Fluor-2,3-benzin-Derivate entstehen, welche unkontrolliert zu unbekannten Folgeprodukten weiterreagieren.

Bei -50 °C ist die Geschwindigkeit der Zersetzungsreaktion der 2,3-Difluorphenyllithium-Derivate noch gering, sie verläuft jedoch explosionsartig bei - 25 °C (kritische Temperatur -22,5 °C), wobei sich die 2,3-Difluorphenyllithium-Derivate schlagartig zersetzen.

Im Vergleich zu den ortho-Fluorarylmetallverbindungen zeigen andere ortho-Halogenarylmetallverbindungen in der Regel eine noch geringere Stabilität, so daß die Zersetzungsreaktionen schon bei deutlich niedrigeren Temperaturen auftreten.

Aus Bull. Soc. Chim. France 1986 No. 6, 925-929 ist beispielsweise bekannt, daß in ortho-Stellung metallierte Chlorarylverbindungen leicht in einer exothermen Reaktion Chlorid abspalten, wodurch Arine gebildet werden, die zur Bildung unerwünschter Nebenprodukte Anlaß geben.

Für größere Ansätze in Produktionsbetrieben kommen diese Verfahren zur Herstellung von Ortho-Halogen- und Ortho-Trifluormethoxyarylmetallverbindungen nicht in Frage, da beim Ausfall des Kühlmittels ein erhöhtes Explosionsrisiko besteht.

Abhilfe schaffen hier in EP 440 082 B1 und DE 42 01 308 C1 beschriebene Verfahren, bei denen das Elektrophil und der Aromat vorgelegt werden und die Base bei Raumtemperatur zugegeben werden kann. Hierbei werden die intermediär entstehenden ortho-Halogenaryllithiumverbindungen sofort in-situ vom jeweiligen Elektrophil abgefangen, so daß es nicht zu einer Anreicherung der instabilen Komponente und somit nicht zu gefährlichen Nebenreaktionen kommen kann.

Diese Verfahren zeigen jedoch unbefriedigende Ausbeuten, wenn ein Halogenaromat mit einem Elektrophil umgesetzt wird, das mit der verwendeten Lithiumbase ähnlich schnell reagiert wie der zu metallierende Halogenaromat oder sogar schneller als dieser. Beispielsweise treten Ausbeuteeinbrüche auf, wenn nach den in EP 440 082 B1 beschriebenen Verfahren ein Halogenaromat in Gegenwart von Butylithium oder Lithiumdiisopropylamid mit einem Keton zu dem entsprechenden Lithiumalkoxid umgesetzt werden soll. In diesem Fall tritt die Addition der Base oder die Enolisierung des Ketons in den Vordergrund, und die gewünschte Reaktion bleibt aus (Schema 3).

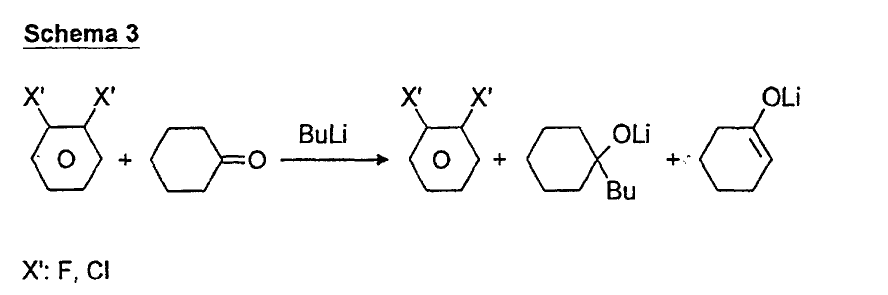

Insbesondere für derartige Umsetzungen sind bisher noch die herkömmlichen Verfahren unumgänglich.

Die sehr tiefen Temperaturen, die in der Regel insbesondere bei den empfindlichen ortho-Halogenmetallverbindungen eingehalten werden müssen, erweisen sich als nachteilig, wenn Aromaten mit nur sehr gering acidem Wasserstoff-Atom deprotoniert werden sollen. Höhere Reaktionsgeschwindigkeiten und damit häufig auch bessere Ausbeuten, die bei höheren Temperaturen erreicht werden können, sind bei den Verfahren nach dem Stand der Technik mit Ausnahme der in EP 440 082 B1 und DE 42 01 308 C1 beschriebenen Verfahren ausgeschlossen.

Schließlich sind die Verfahren nach dem Stand der Technik als typische Batch-Verfahren zeit- und kostenaufwendig in ihrer Durchführung, da Reinigungs-, Wechsel- und Leerlaufzeiten eine optimale Auslastung der verwendeten Anlagen einschränken.

Aufgrund neuerer Entwicklungen in der Elektronik-Industrie ist ein erheblicher Bedarf an Flüssigkristallen entstanden, welche einen ein- oder mehrfach fluorierten 1,4-Phenylenrest, insbesondere einen 2,3-Difluor- bzw. 2,6-Difluor-1,4-phenylenrest aufweisen. Aufgabe der vorliegenden Erfindung war es, ein Herstellungsverfahren für Arylmetallverbindungen und insbesondere für ortho-Halogenarylmetallverbindungen zu finden, das die beschriebenen Nachteile der bisherigen Verfahren nicht aufweist und risikolos im großtechnischen Maßstab durchzuführen ist.

Es wurde jetzt gefunden, daß die Herstellung von Arylmetallverbindungen durch Deprotonierung von Aromaten, die ein Wasserstoffatom in ortho-Position zu einem Halogenatom oder einer Trifluormethoxy-Gruppe aufweisen, mit einer geeigneten Base oder durch Halogen-Metall-Austausch von Halogenaromaten mit einem geeigneten Metallierungsreagenz sich auch bei höheren Temperaturen gefahrlos und mit hoher Ausbeute durchführen läßt, wenn man die Arylmetall-Verbindungen in einem Durchfluß-Reaktor herstellt und sie sofort nach deren Bildung mit einem geeigneten Elektrophil umsetzt.

Dabei kann die Umsetzung der gebildeten Arylmetallverbindungen in der Weise erfolgen, daß man die Arylmetallverbindungen in eine Lösung oder eine Schmelze eines Elektrophils außerhalb des Durchfluß-Reaktors einlaufen läßt oder daß man das Elektrophil direkt nach Bildung der Arylmetallverbindungen in den Durchfluß-Reaktor einleitet und es dort zur Reaktion kommen läßt.

Vorzugsweise leitet man das Elektrophil direkt nach Bildung der Arylmetallverbindungen in den Durchfluß-Reaktor ein.

Durch das erfindungsgemäße Verfahren können bei hohen Ausbeuten auch solche Elektrophile verwendet werden, die im Verfahren nach EP 440 082 B1 und DE 42 01 308 C1 aufgrund ihrer bevorzugten Reaktion mit der Base nicht oder nur mit Ausbeuteeinschränkungen eingesetzt werden konnten.

Wegen des verhältnismäßig kleinen Reaktionsvolumens des Durchfluß-Reaktors befinden sich immer nur kleine Mengen des temperaturempfindlichen Zwischenproduktes im System. Eine Zersetzung dieser Menge stellt in der Regel keine Gefahr dar. Dadurch ist es möglich, den Prozeß auch bei Temperaturen nahe dem Zersetzungspunkt der instabilen metallorganischen Verbindung, bei hoher Durchflußgeschwindigkeit sogar oberhalb dieser Temperatur, gefahrlos auszuführen.

Hohe. Temperaturen können bei der Reaktion weniger acider Halogenaromaten mit Basen zu einer Steigerung der Ausbeute führen, da hierdurch die Deprotonierungsgeschwindigkeit erhöht wird.

Zusätzlich wird bei Ausführung des erfindungsgemäßen Verfahrens bei höheren Temperaturen eine Energieeinsparung durch Anwendung geringerer Kühlleistung erreicht. Dadurch, daß der Durchfluß-Reaktor in der Regel ein gegenüber der normalen Rührapparatur wesentlich besseres Verhältnis von Kühlfläche zu Volumen zu kühlendes Medium aufweist, können schon in verhältnismäßig kleinen Anlagen hohe Umsatzmengen erzielt werden. Aufgrund seines einfachen Aufbaus ist der Durchflußreaktor zudem die deutlich kostengünstigere Alternative zur Rührapparatur mit Tieftemperaturanlage.

Gegenstand der Erfindung ist somit ein Verfahren zur Herstellung von Arylmetall-Verbindungen durch Deprotonierung von Aromaten, die ein Wasserstoffatom in ortho-Pösition zu einem Halogenatom oder einer Trifluormethoxy-Gruppe aufweisen, mit einer geeigneten Base oder durch Halogen-Metall-Austausch von Halogenaromaten mit einem geeigneten Metallierungsreagenz und deren Umsetzung mit Elektrophilen, dadurch gekennzeichnet, daß man die Arylmetall-Verbindungen mit einem Durchfluß-Reaktor herstellt.

Insbesondere betrifft die Erfindung ein Verfahren zur Herstellung von ortho-Halogenarylmetallverbindungen durch Deprotonierung von Aromaten, die ein Wasserstoffatom in ortho-Position zu einem Halogenatom aufweisen, mit einer geeigneten Base oder durch Halogen-Metall-Austausch von Halogenaromaten mit einem Metallierungsreagenz . und deren Umsetzung mit Elektrophilen, dadurch gekennzeichnet, daß man die ortho-Halogenarylmetatlverbindungen in einem Durchfluß-Reaktor herstellt.

Bevorzugter Gegenstand der Erfindung ist ein Verfahren zur Herstellung von ortho-Halogenarylmetallverbindungen und deren Umsetzung mit entsprechenden Elektrophilen zu den Verbindungen der Formel I, 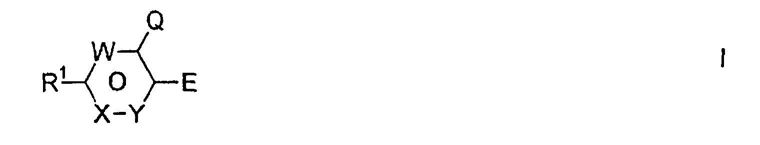 wobei
- Q: F, Cl oder Br,
- R¹: H, F, Cl, Br, CN, Alkyl, Alkenyl, Alkoxy, Alkenyloxy mit jeweils bis zu 18 C-Atomen oder eine mesogene Gruppe,
- W, X und Y: jeweils unabhängig voneinander N, CH, CCN oder CF,
und
- E: 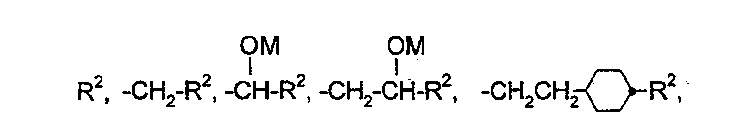 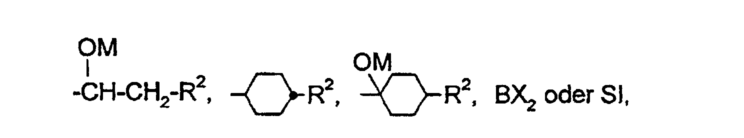 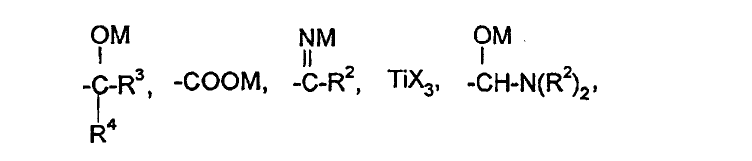 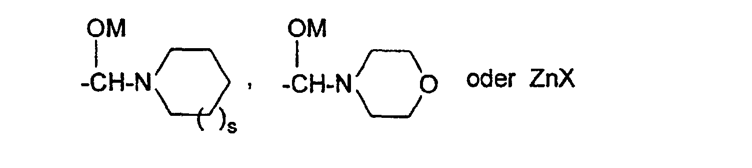
worin
- R²: Alkyl, Alkoxy, Alkenyl, Alkenyloxy mit bis zu 15 C-Atomen oder einen der Gruppe R¹ entsprechender mesogener Rest,
- M: Li, K, MgBr, MgCl oder Mgl,
- S: 0 oder 1
- BX₂: einen Trioxatriborinonrest der Formel 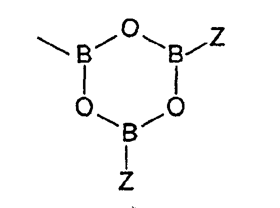 worin Z für 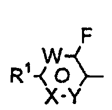 steht oder eine Gruppe der Formel - B(OR³)(OR⁴),
- R³ und R⁴: H, Alkyl, Alkenyl oder Cycloalkyl mit jeweils bis zu 10 C-Atomen oder zusammengenommen eine Alkylendiylgruppe der Formel -(CH₂)ₙ- -CH₂CHR⁵-CH₂-, worin n 2, 3 oder 4 ist und R5 Alkyl, Alkoxy oder Alkenyl mit bis zu 18 C-Atomen oder einen der Formel II entsprechenden mesogenen Rest, und
- SI: eine Trihydrocarbylsilylgruppe der Formel -Si(R⁶)₃ worin R⁶ jeweils unabhängig voneinander aliphatischer, cycloaliphatischer, araliphatischer oder aromatischer Rest ist,
- TiX₃: einen Rest der Formel TiBr₃, TiCl₃ oder Ti(OR₃)₃
- ZnX: einen Rest der Formel ZnBr, ZnCl, ZnR³ oder ZnOR³
bedeuten, dadurch gekennzeichnet, daß man die ortho-Halogenarylmetallverbindungen in einem Durchfluß-Reaktor herstellt.

Besonders bevorzugter Gegenstand der Erfindung ist ein Verfahren zur Herstellung von ortho-Halogenarylmetallverbindungen und deren Umsetzung mit entsprechenden Cyclohexanonen zu den Verbindungen der Formel IA, 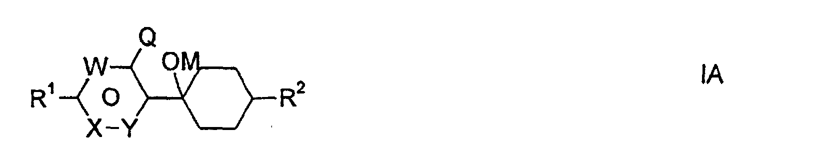 wobei
- Q, R¹, R², M, W, X und Y: die oben angegebene Bedeutung aufweisen, dadurch gekennzeichnet, daß man die ortho-Halogenarylmetallverbindungen in einem Durchfluß-Reaktor herstellt.

Insbesondere sind solche Verfahren Gegenstand der Erfindung, worin R¹ eine mesogene Gruppe der Formel II bedeutet, wobei

R⁰-A¹-Z¹-(A²-Z²)ₘ- II

- R⁰: F, CN, einen unsubstituierten oder einen einfach durch CN, Halogen oder CF₃ substituierten Alkyl- oder Alkenylrest mit bis zu 15 C-Atomen, wobei in diesen Resten auch eine oder mehrere CH₂-Gruppen jeweils unabhängig voneinander durch -S-, -O-, -CO-, -CO-O-, -O-CO- oder -O-CO-O- so ersetzt sein können, daß S- und/oder O-Atome nicht direkt miteinander verknüpft sind,
- Z¹ und Z²: jeweils unabhängig voneinander -CH₂CH₂-, -C≡C-, -CH₂O-, - OCH₂-, -CO-O-, -O-CO-, -CH=N-, -N=CH-, -CH₂S-, -SCH₂-, eine Einfachbindung oder eine Alkylengruppe mit 3 bis 6 C-Atomen, worin auch eine CH₂-Gruppe durch -O-, -CO-O-, - O-CO-, -CHHalogen- oder -CHCN- ersetzt sein kann,
und
- A¹ und A2: jeweils unabhängig voneinander einen
a) trans-1,4-Cyclohexylenrest, worin auch eine oder mehrere nicht benachbarte CH₂-Gruppen durch -Ound/oder -S- ersetzt sein können,
b) 1,4-Phenylenrest, worin auch eine oder zwei CH-Gruppen durch N ersetzt sein können,
c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl, Naphthalin-2,6-diyl, Decahydronaphthalin-2,6-diyl und 1,2,3,4-Tetrahydronaphthalin-2,6-diyl
wobei die Reste (a) und (b) durch CN oder F substituiert sein können, und
- m: 0, 1 oder 2
bedeuten.

Die nach dem erfindungsgemäßen Verfahren hergestellten ortho-Halogenaryl-Derivate umfassen Mono-, Di-, Tri- und Tetra-Halogenphenyl-Derivate sowie Penta-Halogenphenyl-Derivate.

Besonders bevorzugt ist eine Ausführungsform der Erfindung, wobei die durch Metallierung erhaltenen Arylmetallverbindungen mit einem Metallhalogenid wie z.B. ZnCl₂ oder ZnBr₂, oder anderen Metallverbindungen, wie z.B. Ti(OR³)₄, vorzugsweise Titantetraisopropylat, Titantetramethylat, Titantetraethylat oder Titantetra-n-propylat umgesetzt werden. Die durch diese Transmetallierung erhaltenen Verbindungen sind in der Regel temperaturstabiler als die Ausgangsmaterialien und können ebenfalls mit Elektrophilen umgesetzt werden.

Daneben können nach dem erfindungsgemäßen Verfahren auch 2-Halogenpyridin-3-yl-Derivate hergestellt werden. Ob neben den Fluorsubstituenten weitere Substituenten am aromatischen Ring vorhanden sind, ist bei der Durchführung des erfindungsgemäßen Verfahrens unkritisch. Als weitere Substituenten seien beispielsweise Alkyl-, Alkenyloder Alkoxygruppen, Chlor und Brom oder mesogene Gruppen genannt Daneben können die fluorierten aromatischen Ringe auch Bestandteile von kondensierten Ringsystemen sein, wie z.B. von Naphthalinen, Di- und Tetrahydronaphthaleinen oder von 2,3,4,5-Tetrahydro-1H-3-benzazepin-Derivaten.

Der Einfachheit halber bedeuten im folgenden Phe eine 1,4-Phenylengruppe, worin auch eine oder zwei CH-Gruppen durch N ersetzt sein können, wobei eine 1,4-Phenylengruppe auch durch ein oder zwei Halogenatome substituiert sein kann, ArF eine fluorierte 1,4-Phenylengruppe der Formel 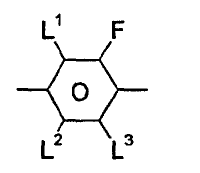 wobei L¹, L² und L³ jeweils unabhängig voneinander H oder F bedeuten.

Cyc bedeutet einen trans-1,4-Cyclohexylenrest, worin auch eine oder mehrere nicht benachbarte CH₂-Gruppen durch -O- ersetzt sein können.

E bedeutet eine Gruppe, welche durch die erfindungsgemäße Reaktion eingeführt wurde.

Vorzugsweise werden Ketone, Carbonsäureamide oder Aldehyde als Elektrophil verwendet.

Bevorzugte Elektrophile sind die folgenden Verbindungen der Formeln IIIa bis IIIq:

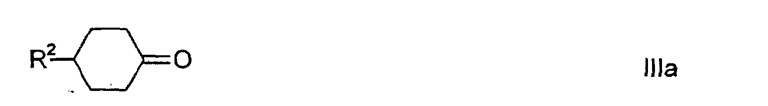

R²-CHO IIIb

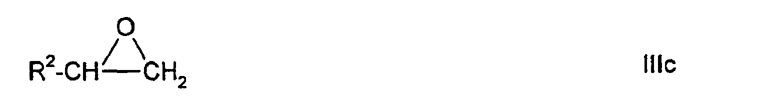

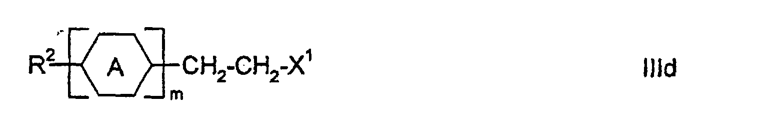

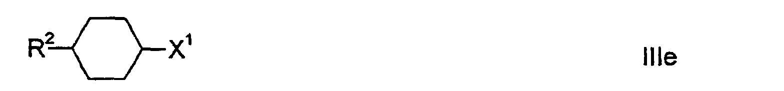

R²-CH₂-X¹ IIIf

R₃-CO-R⁴ IIIg

(R²)₂N-CHO IIIh

CO₂ IIIi

Halogene IIIj

Ti(OR³)₃ IIIk

ZnCl₂ IIIl

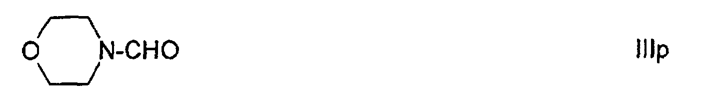

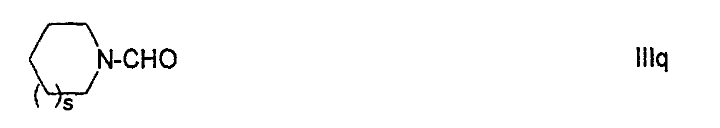

worin R2 Alkyl mit 1 bis 15 C-Atome oder eine der Formel II entsprechende mesogene Gruppe bedeutet, 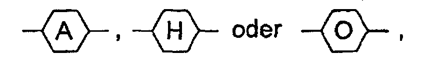 m 1 oder 2 und X¹ Cl, Br, Jod, eine Toluol- oder Benzolsulfonsäuregruppe oder eine Perfluoralkylsulfonsäuregruppe bedeutet. Halogene bedeutet vorzugsweise F, Cl, Br, I, insbesondere Br oder I. R³ und s weisen die oben angegebene Bedeutung auf.

Silylierungsreagenzien sind die Verbindungen der Formel IIIm SI-L, worin SI die gegebene Bedeutung besitzt und L eine Abgangsgruppe darstellt, insbesondere Verbindungen der Formeln IIIm1 bis IIIm8:

(CH₃)₃Si-Cl IIIm1

(CH₃)SiBr IIIm2

(CH₃)₃SiJ IIIm3

(CH₃)₃SiOSO₂CF₃ IIIm4

(CH₃)₂ (tert.-C₄H₉)SiCl IIIm5

(C₆H₅)₂ (tert.-C₄H₉)SiCl IIIm6

(C₂H₅)₃SiCl IIIm7

(I-C₃H₇)₃SiCl IIIm8

Zur Herstellung der Verbindungen der Formel I, worin E B(OR³)(OR⁴) bedeutet, eignen sich vorzugsweise Trialkylborate der Formel IIIn1 B(OR³)₂(OR⁴).

Insbesondere bevorzugt werden für das erfindungsgemäße Verfahren die Elektrophile der Formeln IIIa1 bis IIIn1 eingesetzt:

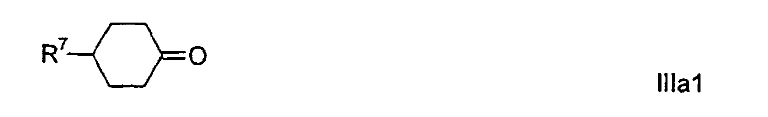

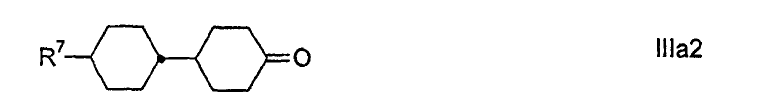

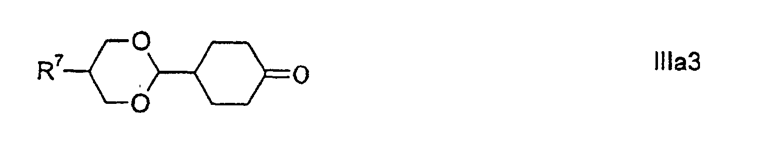

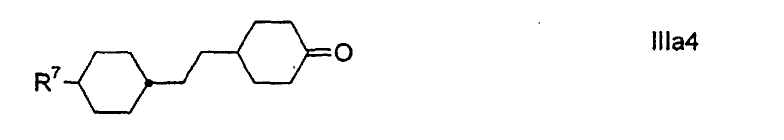

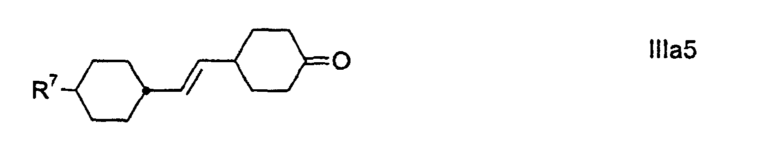

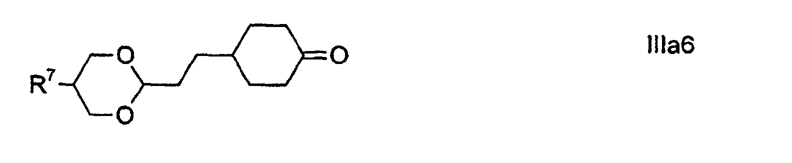

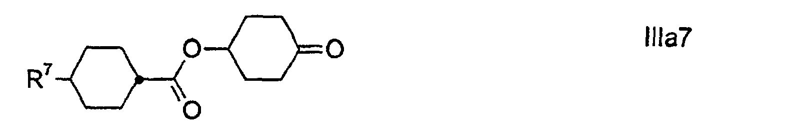

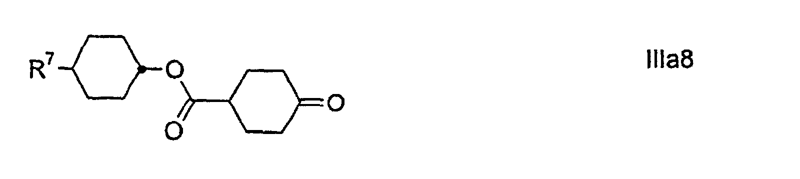

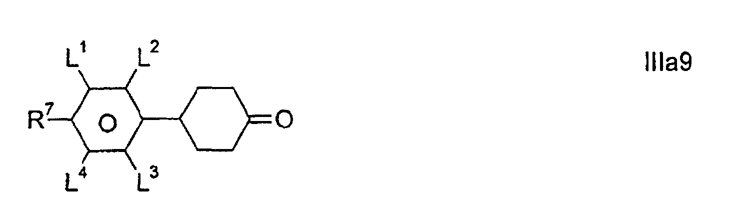

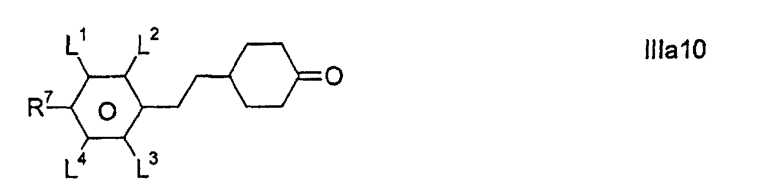

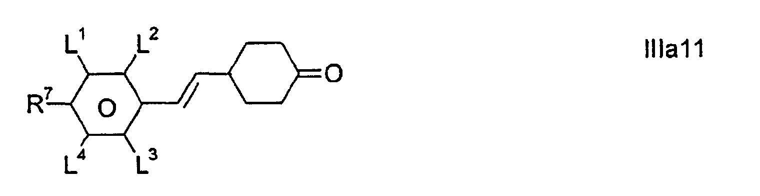

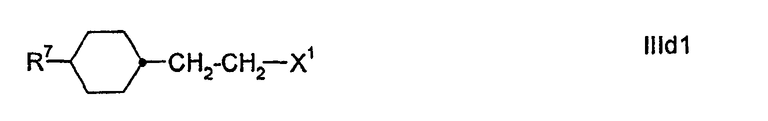

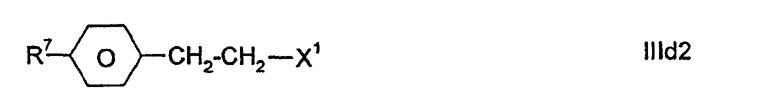

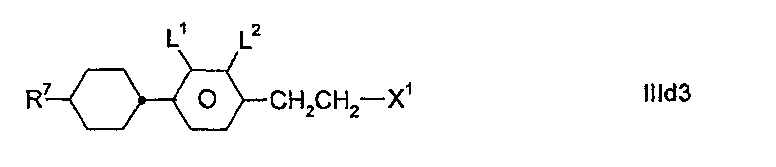

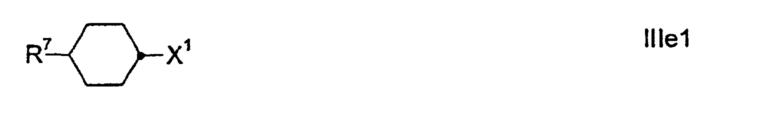

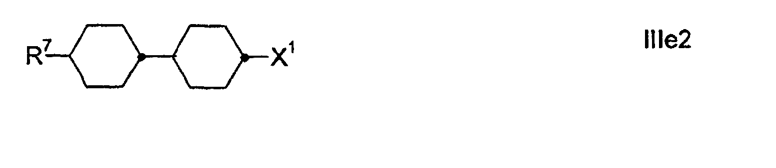

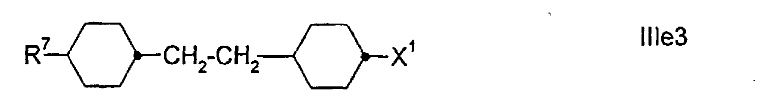

(CH₃)₂N-CHO IIIh1

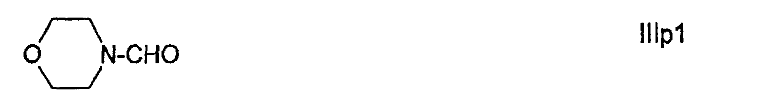

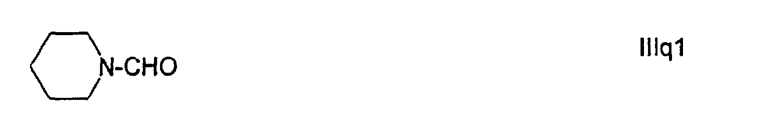

(H₃C)₃SiCl IIIm1

(H₃C)₂ (tert.-C₄H₉)SiCl IIIm5

B(OR³)₂(OR⁴) IIIn1

worin R⁷ vorzugsweise einen Alkyl, Alkoxy, Alkenyl oder Alkenyloxyrest mit bis zu 12 C-Atomen und L¹, L², L³ und L⁴ H oder F bedeutet.

Weitere bevorzugte Elektrophile für das erfindungsgemäße Verfahren sind die Ketone der Formel IIIo 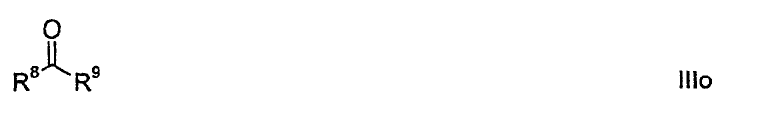 worin

R⁸ und R⁹ unabhängig voneinander einen unsubstituierten oder einen einfach durch CN, Halogen oder CF₃ substituierten Alkyl- oder Alkenylrest mit bis zu 15 C-Atomen bedeuten, wobei in diesen Resten auch eine oder mehrere CH₂-Gruppen jeweils unabhängig voneinander durch -S-, -O-, A, -CO-, -CO-O-, O-CO- oder -O-CO-O so ersetzt sein können, daß -Sund/oder -O-Atome nicht direkt miteinander verknüpft sind.

A bedeutet jeweils unabhängig voneinander einen
(a) trans-1,4-Cyclohexylenrest, worin auch eine oder mehrere nicht benachbarte CH₂-Gruppen durch -O- und/oder -S- ersetzt sein können.
(b) 1,4-Phenylenrest, worin auch eine oder zwei CH-Gruppen durch N ersetzt sein können.
(c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl,
wobei die Reste (a), (b) und (c) ein- oder mehrfach durch R⁸, R⁹, CN oder Halogen substituiert sein können bedeuten.

Insbesondere bevorzugt werden durch das erfindungsgemäße Verfahren die Verbindungen der Formeln IV1 bis IV10 metalliert. 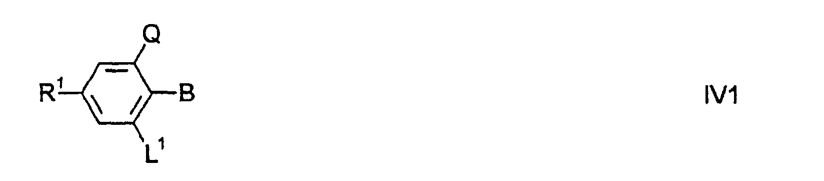 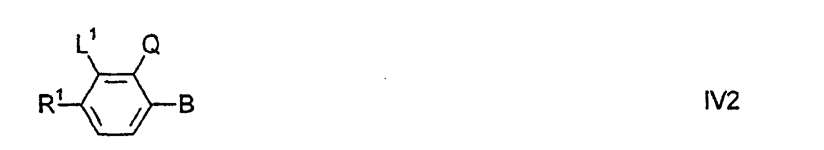 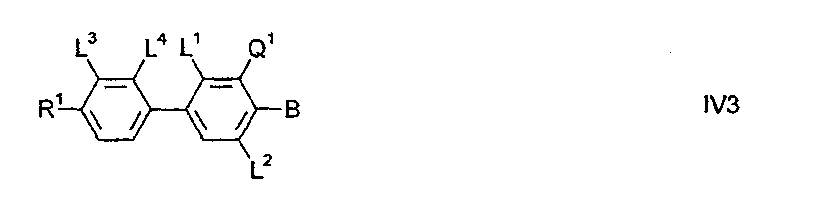 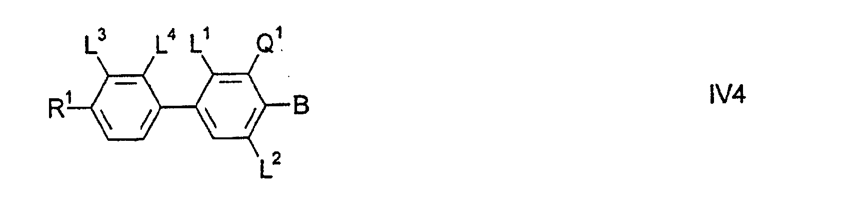 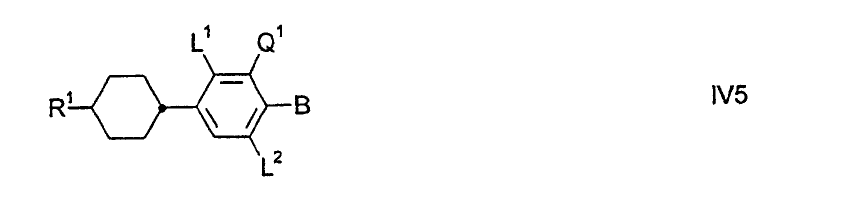 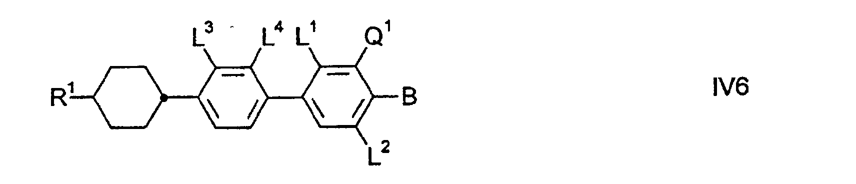 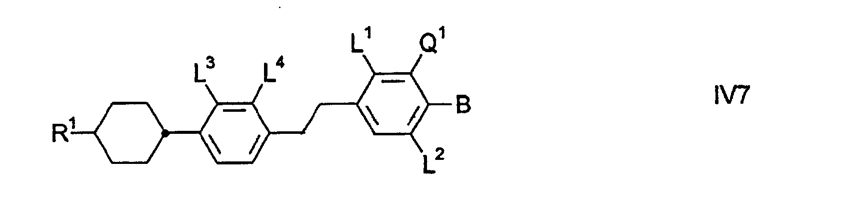 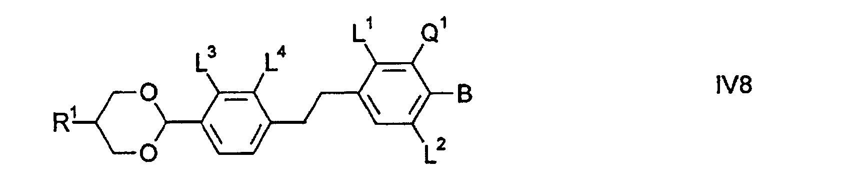 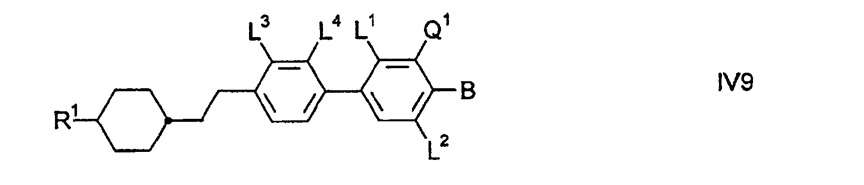 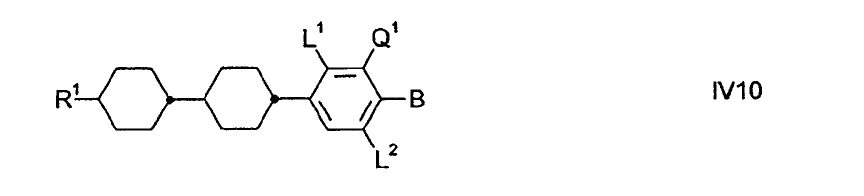 worin B, H, Br oder I bedeutet, Q und R¹ die oben angegebene Bedeutung aufweist und L¹, L², L³ und L⁴ unabhängig voneinander H oder F bedeutet.

In den bevorzugten Ausgangsverbindungen der Formeln IV1 bis IV10, aus denen die Arylmetallverbindungen durch Deprotonierung mittels einer geeigneten Base erzeugt werden, nimmt der Rest B die Bedeutung H an.

In den bevorzugten Ausgangsverbindungen der Formeln IV1 bis IV10, aus denen die Arylmetallverbindungen durch Halogen-Metall-Austausch mittels eines geeigneten Metallierungsreagenz erzeugt werden, nimmt der Rest B die Bedeutung Br oder I, insbesondere bevorzugt die Bedeutung Br an.

Vorzugsweise bedeutet nur einer der Reste L¹ und L²H und der andere F.

Q¹ bedeutet F oder Cl, insbesondere F.

Die nach dem erfindungsgemäßen Verfahren hergestellten Verbindungen der Formel I umfassen diejenigen der Formeln Ia bis Ii:

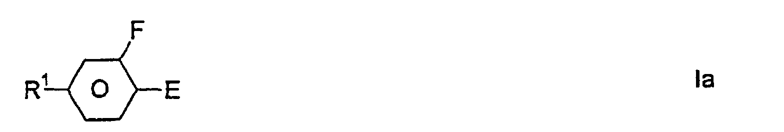

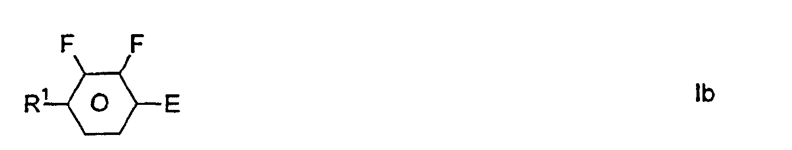

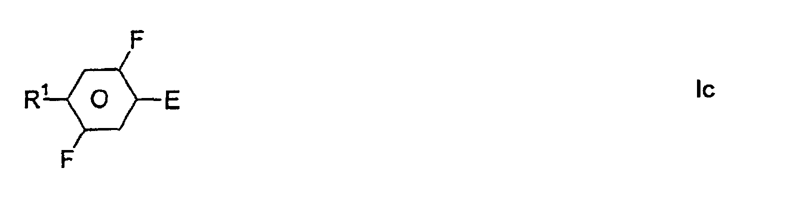

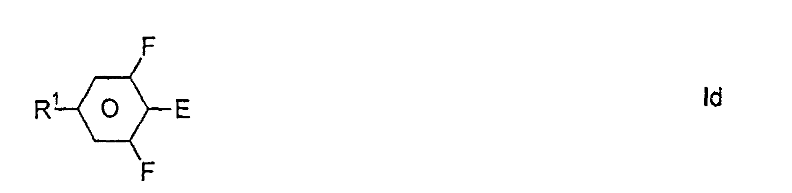

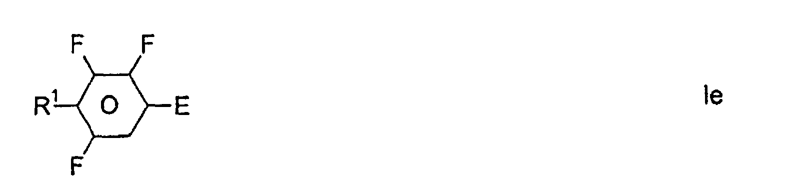

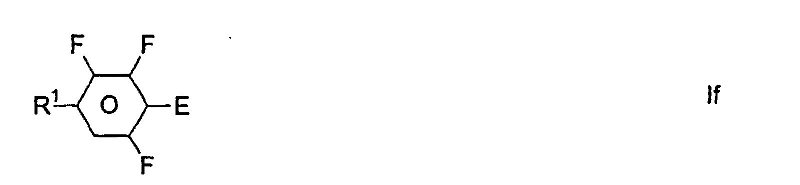

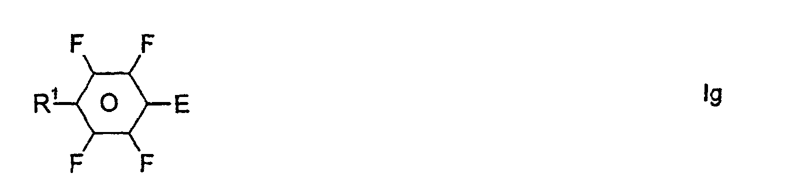

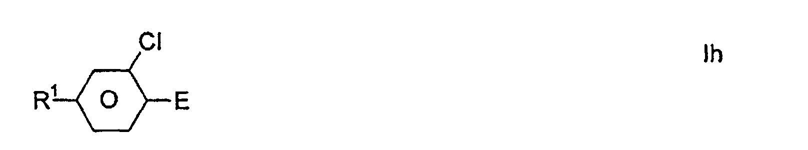

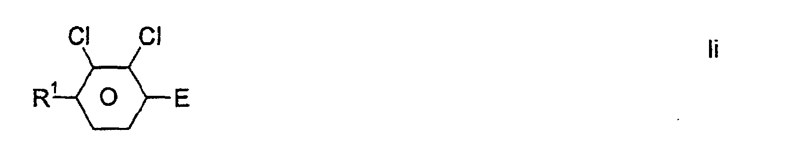

Davon sind die Verbindungen der Formeln Ia, Ib, Id und Ig besonders bevorzugt In den genannten Verbindungen der Formeln Ia bis Ii bedeutet R¹ vorzugsweise H, Alkyl oder Alkoxy mit jeweils 1 bis 12 C-Atomen oder ein mesogener Rest, besonders bevorzugt werden nach dem erfindungsgemäßen Verfahren die Verbindungen der Formel Ib, worin R¹ H oder Alkoxy mit 1 bis 12, insbesondere mit 2 bis 4 C-Atomen bedeutet.

Die Verbindungen der Formeln Ib, Ie, If und Ig eignen sich besonders als Zwischenprodukte zur Herstellung von Flüssigkristallen mit einer 2,3-Difluor-1,4-phenylen bzw. 2,3-Difluor-1,4-phenylenoxy-Struktureinheit. Die Verbindungen der Formel I, welche einen mesogenen Rest der Formel II aufweisen, umfassen die bevorzugten Verbindungen der Formeln I1 bis I13:

R^{o}-A¹-ArF-E I1

R^{o}-A¹-Z¹-ArF-E I2

R^{o}-A¹-A²-ArF-E I3

R^{o}-A¹-A²-Z²-ArF-E I4

R^{o}-A¹-Z¹-A²-ArF-E I5

R^{o}-A¹-Z¹-A²-Z²-ArF-E I6

R^{o}-A¹-A²-A²-ArF-E I7

R^{o}-A¹-Z¹-A²-A²-ArF-E I8

R^{o}-A¹-A²-Z²-A²-ArF-E I9

R^{o}-A¹-A²-A²-Z²-ArF I10

R^{o}-A¹-Z¹-A²-Z²-A²-ArF-E I11

R^{o}-A¹-Z¹-A²-A²-Z²-ArF-E I12

R^{o}-A¹-A²-Z²-A²-Z²-ArF-E I13

Darunter sind die Verbindungen der Formeln 11, 12, 13, 14 und 17 besonders bevorzugt.

Von den Verbindungen der Formeln I1 sind diejenigen der Formeln I1a bis I1c besonders bevorzugt.

Alkyl-Phe-ArF-E I1a

Alkyl-Cyc-ArF-E I1b

Alkoxy-Phe-ArF-E I1c

Von den Verbindungen der Formel 12 sind diejenigen der Formeln 12a bis 12i besonders bevorzugt.

Alkyl-Phe -CH₂CH₂-ArF-E I2a

Alkyl-Phe-CH₂O-ArF-E I2b

Alkyl-Phe-C≡C-ArF-E I2c

Alkoxy-Phe-C≡C-ArF-E I2d

Alkoxy-Phe-CH₂O-ArF-E I2e

Alkoxy-Phe-CH₂CH₂-ArF-E I2f

Alkyl-Cyc-CH₂CH₂-ArF-E I2g

Alkyl-Cyc-CH₂O-ArF-E I2h

Alkyl-Cyc-C≡C-ArF-E I2i

Die folgende Gruppe von Verbindungen umfaßt die besonders bevorzugten Verbindungen I14 bis I28, die nach dem erfindungsgemäßen Verfahren herstellbar sind. 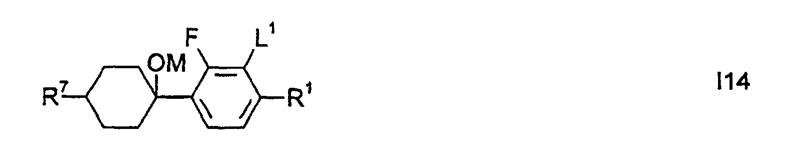 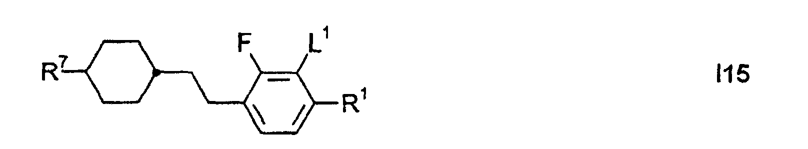 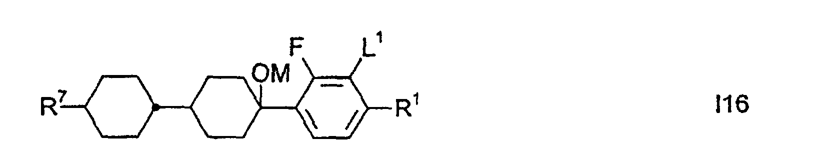 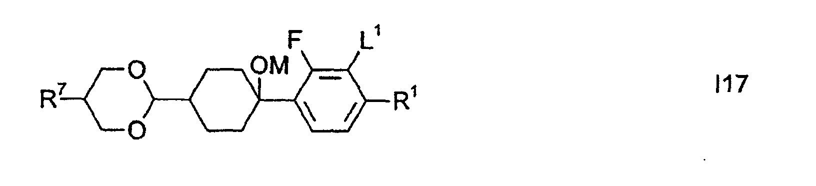 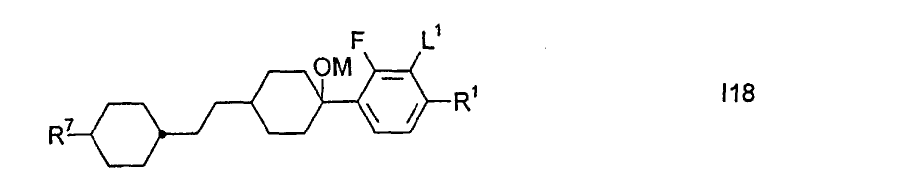 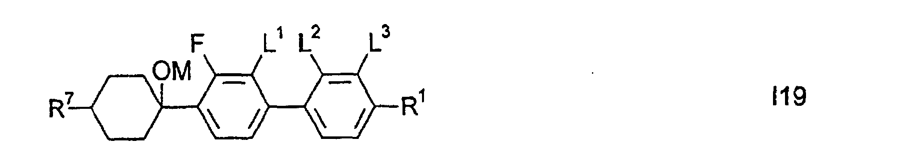 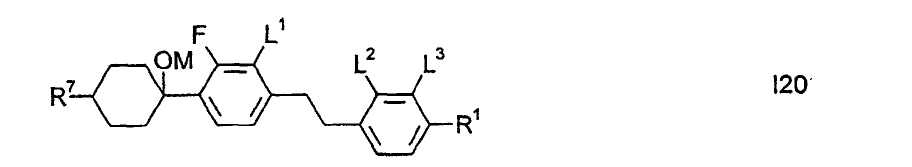 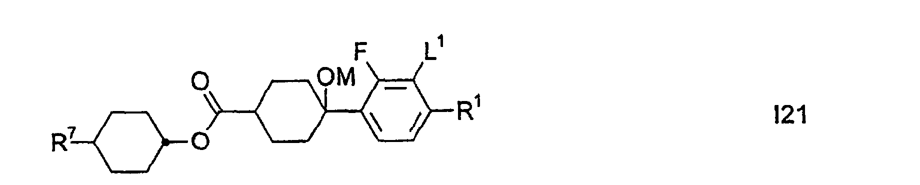 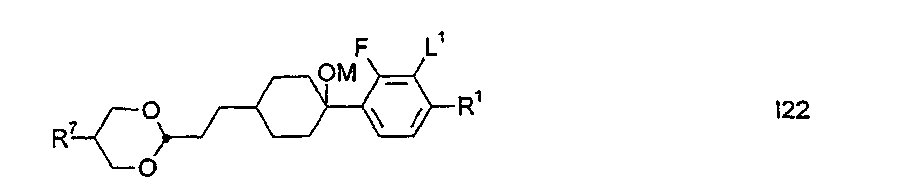 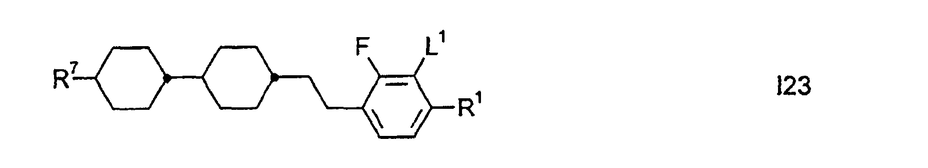 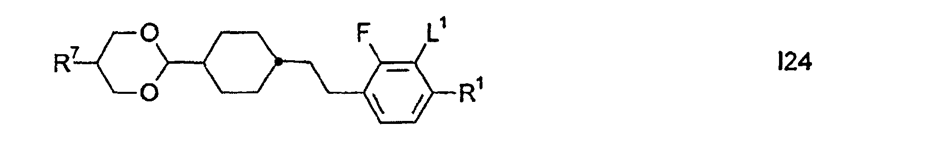 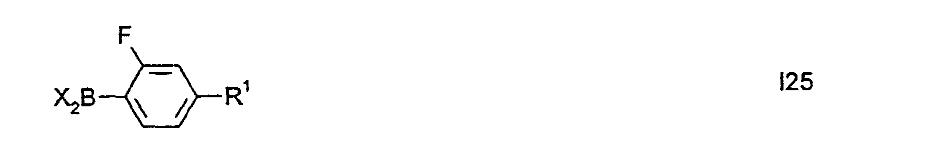 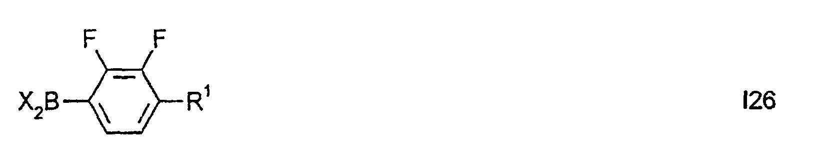 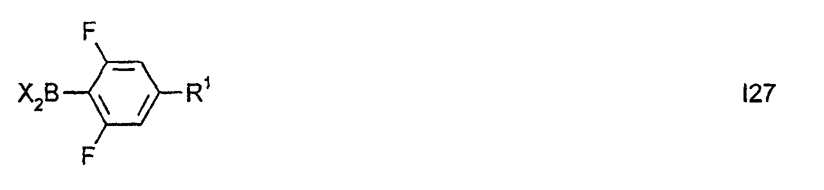 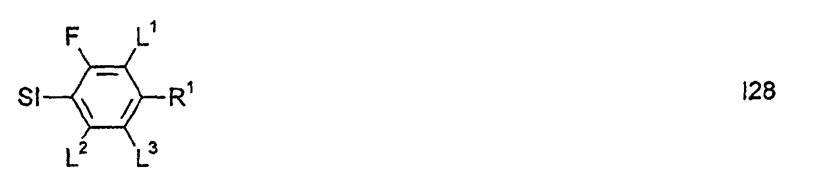 worin R¹, R⁷, BX₂ und Sl die oben angegebene Bedeutung annehmen. L¹, L² und L³ bedeuten unabhängig voneinander H oder F.

In den bevorzugten Verbindungen der vor- und nachstehenden Formeln sind R¹ und R² unabhängig voneinander Alkylgruppen mit vorzugsweise 1 bis 10 C-Atomen, Alkoxy-, Alkenylgruppen oder Alkenyloxygruppen mit vorzugsweise jeweils 1 bis 10 C-Atomen.

Besonders bevorzugte Alkylgruppen sind n-Hexyl, n-Pentyl, n-Butyl, i--Butyl, Propyl, i-Propyl, Methyl und Ethyl, insbesondere Methyl; besonders bevorzugte Alkoxygruppen sind n-Hexoxy, n-Pentoxy, n-Butoxy, i-Butoxy, n-Propoxy, i-Propoxy, Methoxy und Ethoxy, insbesondere Methoxy; besonders bevorzugte Alkenylgruppen sind Hexenyl, Pentenyl, Butenyl und Allyl.

In den bevorzugten Verbindungen der vor- und nachstehenden Formeln können die Alkylreste, in denen auch eine CH₂-Gruppe (Alkoxy bzw. Oxaalkyl) durch ein O-Atom ersetzt sein kann, geradkettig oder verzweigt sein. Vorzugsweise haben sie 2, 3, 4, 5, 6, 7, 8, 9 oder 10 C-Atome und bedeuten demnach bevorzugt Ethyl, Propyl, Butyl, Pentyl, Hexyl, Heptyl, Octyl, Nonyl, Decyl, Propoxy, Ethoxy, Butoxy, Pentoxy, Hexoxy, Heptoxy, Octoxy, Nonoxy oder Decoxy, femer auch Undecyl, Dodecyl, Undecoxy, Dodecoxy, 2-Oxapropyl (= 2-Methoxypentyl), 2-, 3- oder 4-Oxapentyl, 2-, 3-, 4- oder 5-Oxahexyl, 2-, 3-, 4-, 5- oder 6-Oxaheptyl.

A¹ und A2 sind bevorzugt Cyc oder Phe. In den Verbindungen der vor- und nachstehenden Formeln bedeutet Phe vorzugsweise eine 1,4-Phenylen-(Ph), eine ein- oder zweifach durch F oder CN substituierte 1,4-Phenylengruppe (PheX), eine Pyrimidin-2,5-diyl- (Pyr), eine Pyridin-2,5-diyl- (Pyn), eine Pyrazin-3,6-diyl- oder eine Pyridazin-2,5-diyl-Gruppe, insbesondere bevorzugt Ph, PheX, Pyr oder Pyn. Vorzugsweise enthalten die nach dem erfindungsgemäßen Verfahren hergestellten Verbindungen nicht mehr als eine 1,4-Phenylengruppe, worin eine oder zwei CH-Gruppen durch N ersetzt sind. Cyc bedeutet vorzugsweise eine 1,4-Cyclohexylengruppe. Insbesondere bevorzugt sind jedoch Verbindungen der Formel I, worin eine der Gruppen A¹ und A² eine in 1- oder 4-Position durch CN oder F substituierte 1,4-Cyclohexylengruppe bedeutet und die Nitrilgruppe bzw. das Fluoratom sich in axialer Position befindet, d.h. die Gruppe A¹ bzw. A₂ die folgende Struktur aufweist:

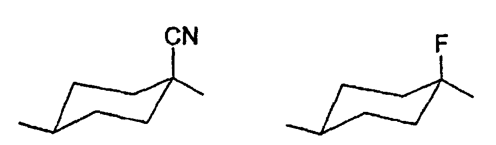

Besonders bevorzugt sind Verbindungen der Formel I und der vorstehenden Teilformeln, die eine Gruppierung -Phe-Phe- enthalten. -Phe-Phe- ist vorzugsweise -Ph-Ph-, Pyr-Phe oder Ph-Pyn. Besonders bevorzugt sind die Gruppen 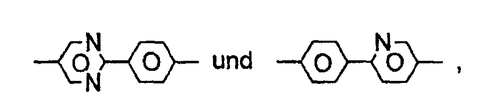 sowie
ferner unsubstituiertes oder ein- oder mehrfach durch Fluor substituiertes 4,4'-Biphenylyl.

Insbesondere bevorzugt sind Verbindungen der Formel I und der nachstehenden Teilformeln, die eine 2,3-Difluor-1,4-phenylengruppe enthalten.

Die Gruppen Z¹ und Z² bedeuten jeweils unabhängig voneinander bevorzugt eine Einfachbindung, in zweiter Linie bevorzugt -C≡C- oder -CH₂CH₂-Gruppen. Insbesondere bevorzugt sind Verbindungen der Formeln I worin die Gruppe Z¹ -CH₂CH₂- bedeutet. Verbindungen der vor- und nachstehenden Formeln mit verzweigten Flügelgruppen R¹ können von Bedeutung sein.

Verzweigte Gruppen dieser Art enthalten in der Regel nicht mehr als zwei Kettenverzweigungen. R¹ ist vorzugsweise eine geradkettige Gruppe oder eine verzweigte Gruppe mit nicht mehr als einer Kettenverzweigung.

Bevorzugte verzweigte Reste sind Isopropyl, 2-Butyl (= 1-Methylpropyl), Isobutyl (= 2-Methylpropyl), tert.-Butyl, 2-Methylbutyl, Isopentyl (= 3-Methylbutyl), 2-Methylpentyl, 3-Methylpentyl, 4-Methylpentyl, 2-Ethylhexyl, 5-Methylhexyl, 2-Propylpentyl, 6-Methylheptyl, 7-Methyloctyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl.

Der Rest R¹ kann auch ein optisch aktiver organischer Rest mit einem asymmetrischen Kohlenstoffatom sein. Vorzugsweise ist dann das asymmetrische Kohlenstoffatom mit zwei unterschiedlich substituierten C-Atomen, einem H-Atom und einem Substituenten ausgewählt aus der Gruppe Fluor, Alkyl oder Alkoxy mit jeweils 1 bis 5 C-Atomen und CN verknüpft. Der optisch aktive organische Rest R hat vorzugsweise die Formel, 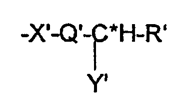 worin
- X': -O-, -S- oder eine Einfachbindung,
- Q': Alkylen mit 1 bis 5 C-Atomen, worin auch eine nicht mit X' verknüpfte CH₂-Gruppe durch -O-, ersetzt sein kann, oder eine Einfachbindung,
- Y': CN, F, CF₃, Methyl oder Methoxy, und
- R': eine von Y' verschiedene Alkylgruppe mit 1 bis 15 C-Atomen, worin auch eine oder zwei nicht benachbarte CH₂-Gruppen durch -S-, -O- ersetzt sein können,
bedeutet.
- X': ist vorzugsweise eine Einfachbindung.
- Q': ist vorzugsweise -CH₂-, -CH₂CH₂-, -CH₂CH₂CH₂- oder eine Einfachbindung, insbesondere bevorzugt eine Einfachbindung.
- Y': ist vorzugsweise CH₃, -CN oder F, insbesondere bevorzugt CN oder F.
- R': ist vorzugsweise geradkettiges oder verzweigtes Alkyl oder Alkoxy mit 1 bis 10, insbesondere mit 1 bis 7, C-Atomen.

Unter den Verbindungen der Formeln I, IA, sowie la bis Ii sind diejenigen bevorzugt, in denen mindestens einer der darin enthaltenen Reste eine der angegebenen bevorzugten Bedeutungen hat.

Die als Ausgangsstoffe benötigten Verbindungen der Formel IV, 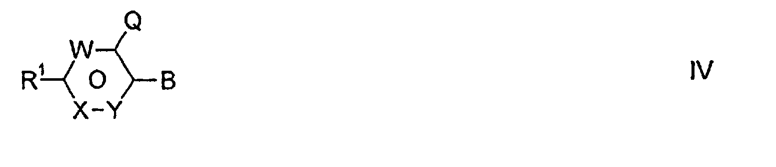 worin Q, R¹, W, X und Y die angegebene Bedeutung besitzen, und B, H oder Halogen, vorzugsweise H, Br, oder I bedeutet, sind bekannt oder werden nach an sich bekannten Methoden hergestellt, wie sie in der Literatur beschrieben sind (z.B. in den Standardwerken wie Houben-Weyl, Methoden der organischen Chemie, Georg-Thieme-Verlag, Stuttgart), und zwar unter Reaktionsbedingungen die für die genannten Umsetzungen bekannt und geeignet sind. Dabei kann man auch von an sich bekannten, hier nicht näher erwähnten Varianten Gebrauch machen.

Die bei der Reaktion von Arylmetallverbindungen mit Elektrophilen wie Ketonen, Aldehyden oder Oxiranen entstehenden Metallalkoxide werden bei wäßriger Aufarbeitung in die entsprechenden Alkohole überführt, die nach bekannten Methoden weiterverarbeitet werden können. Es ist ebenso möglich, die Metallalkoxide direkt nach bekannten Methoden weiterzuverarbeiten.

Weitere Verwendungsmöglichkeiten der durch das erfindungsgemäße Verfahren hergestellten Verbindungen sind z.B. in EP 440082 beschrieben.

Die folgenden Schemata geben bevorzugte Weiterverarbeitungsmöglichkeiten wider:

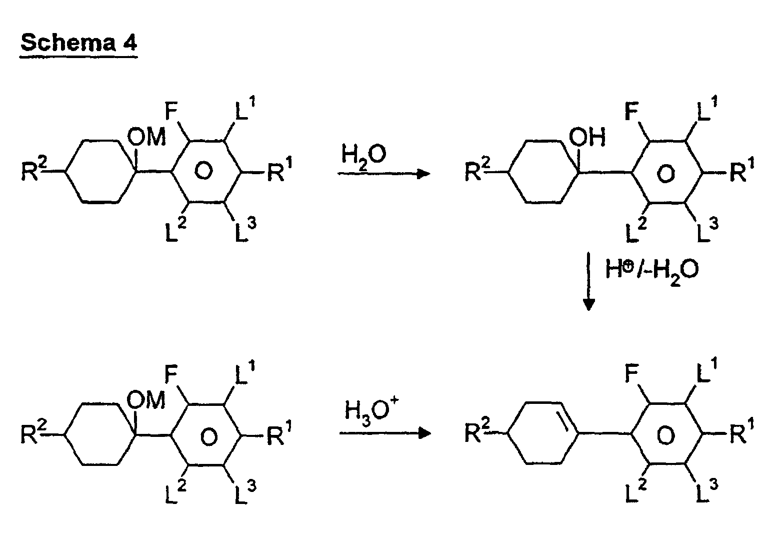

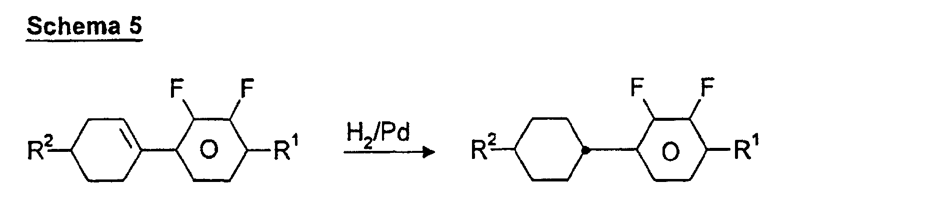

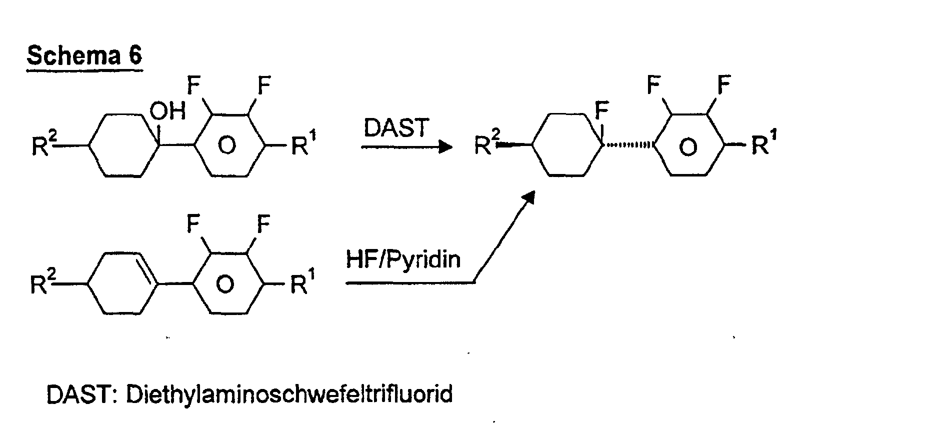

Die Reaktionsdurchführung des erfindungsgemäßen Verfahrens ist einfach, wobei zunächst die Arylmetallverbindungen in der Weise hergestellt werden, daß man die Ausgangsstoffe bei Temperaturen von - 100 °C bis +100 °C, vorzugsweise -40 °C bis +40 °C, insbesondere bei 35 °C bis 0 °C in einem Durchfluß-Reaktor zur Reaktion bringt. Die gebildeten Arylmetallverbindungen werden anschließend vorzugsweise bei derselben oder einer höheren Temperatur mit einem Elektrophil umgesetzt. Dabei kann die Arylmetallverbindung in eine Schmelze oder eine Lösung des Elektrophils eingeleitet werden oder das Elektrophil in einem Durchfluß-Reaktor mit der Arylmetallverbindung zur Reaktion gebracht werden.

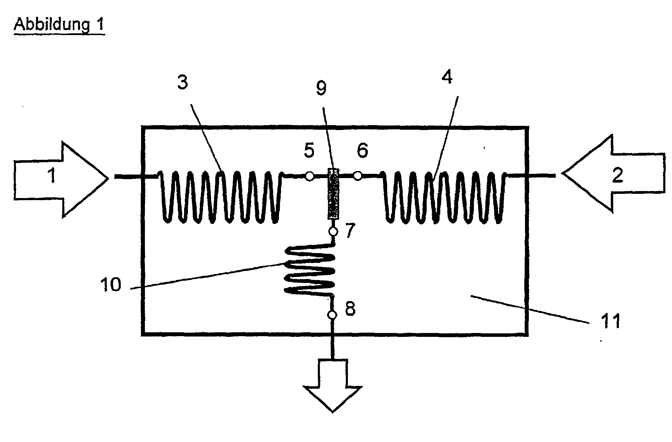

Dabei hat der Durchfluß-Reaktor bevorzugt den in Zeichnung 1 angegebenen schematischen Aufbau. Hierin bedeuten 1 und 2 Pumpen für die Ausgangsmaterialien, 3 und 4 Kühler für die Ausgangsmaterialien, 5, 6, 7 und 8 Temperaturmeßpunkte, 9 ein Mischer für die Reaktanden, bevorzugt ein Statik-Mischer, 10 der Produktkühler und 11 das durch einen Thermostat temperierte Kühlmedium.

Die Ausgangsstoffe werden demgemäß in einem definierten Massen- oder Volumenstrom über die Kühler 3 und 4 im Mischer 9 zur Reaktion gebracht und das Produkt nach Durchlaufen des Produktkühlers in eine Lösung oder eine Schmelze des Elektrophils geleitet.

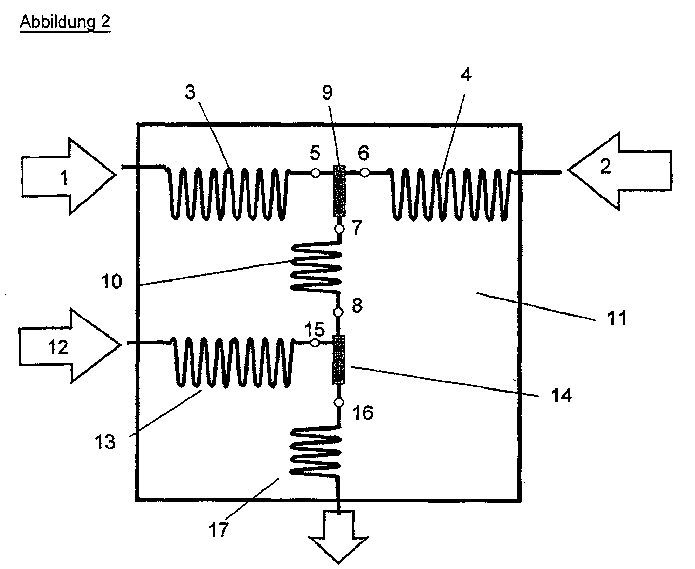

In einer weiteren bevorzugten Ausführungsform der Erfindung hat der Durchfluß-Reaktor den in der Zeichnung 2 angegebenen schematischen Aufbau. Hierin haben die Ziffern 1 bis 11 die für die Zeichnung 1 angegebene Bedeutung, während 12 eine Pumpe für das umzusetzende Elektrophil, 13 der Kühler für das Elektrophil, 14 ein weiterer Mischer, vorzugsweise Statik-Mischer, 15, 16 Temperaturmeßpunkte und 17 ein Kühler für die gebildeten Verbindungen der Formel I bedeutet.

In einer solchen Apparatur ist es demnach möglich, die im Mischer 9 gebildete Arylmetallverbindung kontiniuierlich mit einem geeigneten Elektrophil umzusetzen.

Als Statik-Mischer kommen bevorzugt auch Mikromischer in Betracht; die z.B. von der Firma Sulzer, Deutschland oder von der Firma Kenics vertrieben werden.

In der Regel werden die Ausgangsmaterialien mit identischen molaren Mengen in den Durchfluß-Reaktor eingebracht, es kann aber auch vorteilhaft sein, eine oder zwei Komponenten im Überschuß einzusetzen.

Die Ausgangsstoffe, d. h. zu metallierender Aromat, Base oder Metallierungsreagenz und Elektrophil können sowohl in der Schmelze als auch in einem geeigenten Lösungsmittel in den Durchfluß-Reaktor eingebracht werden. Dabei können die Ausgangsstoffe in den gleichen oder in unterschiedlichen Lösungsmitteln gelöst sein. Vorraussetzung ist jedoch die Mischbarkeit der verwendeten Lösungsmittel. Vorzugsweise werden inerte Lösungsmittel eingesetzt, die konventionell für Umsetzungen mit starken Basen oder Metallierungsreagenzien in Betracht kommen, z.B. Ether wie Diethylether, Tetrahydrofuran oder Methyl-tert.-Butylether, Kohlenwasserstoffe wie Pentan, Hexan, Heptan, Benzol, Toluol, Xylol oder Cyclohexan oder Gemische der genannten Lösungsmittel. Diesen Lösungsmitteln können auch Cosolventien, wie z.B. Hexamethylphosphorsäuretriamid (HMPT), Tetramethylethylendiamin (TMEDA), Dimethylpropylenharnstoff (DMPU) oder Kronenether, wie 18-Crown-6, zugesetzt werden. Die Lösungsmittelmenge ist nicht kritisch, im allgemeinen können 100 bis 1000 g Lösungsmittel je Mol der zu metallierenden aromatischen Verbindungen verwendet werden.

Als Basen für die Deprotonierung der Halogenaromaten und Trifluormethoxyaromaten finden die in den Verfahren nach dem Stand der Technik angewandten Basen Verwendung.

Vorzugsweise sind dies Metallamide, insbesondere Lithiumamid, Lithium-, Natrium- oder Kaliumdialkylamid, wie z.B. Lithiumdimethylamid, Lithiumdiethylamid oder Lithium-, Natrium- oder Kaliumdiisopropylamid, Lithiumpiperidid, Lithium-, Natrium- oder Kaliumbis(trimethylsilyl)amid oder Litihium-, Natrium- oder Kalium-2,2,6,6-tetramethylpiperidid. Im allgemeinen sind die Lithiumamide besonders bevorzugt.

Die Metallamide können direkt eingesetzt werden oder in situ durch Umsetzung der entsprechenden Amine mit einer Alkylmetall- oder Arylmetall-Verbindung hergestellt werden.

Bevorzugt ist eine Ausführungsform des erfindungsgemäßen Verfahrens worin katalytische Mengen eines Amins, vorzugsweise eines sekundären Amins wie Diisopropylamin oder 2,2,6,6-Tetramethylpiperidin oder Bis(trimethylsilyl)amin, verwendet wird, das durch Zugabe einer Alkylmetall- oder Arylmetall-Verbindung in das entsprechende Metallamid übergeführt wird. Nach Deprotonierung eines ortho-Halogen- oder Trifluormethoxyaromaten durch dieses Metallamid wird das bei der Reaktion gebildete Amin erneut durch gegenwärtige Alkylmetall- oder Arylmetall-Verbindung in das Metallamid übergeführt. Die Anwendung von katalytischen Mengen des Amins erhöht die Ausbeute an Arylmetaltverbindung und die Deprotonierungsgeschwindigkeit.

Unter einer katalytischen Menge des Amins wird vorzugsweise 0.1 bis 90 mol%, insbesondere 0.2 bis 30 mol% und ganz besonders bevorzugt 1 bis 15 mol% bezogen auf die zu deprotonierende Verbindung verstanden.

Weiterhin bevorzugt zur Deprotonierung der Halogen- oder Trifluormethoxyaromaten sind Alkyl- oder Arylmetallverbindungen, die üblicherweise in der organischen Chemie gebräuchlich sind (z.B. House: Modern Synthetic Reactions, 2nd Ed., Benjamin 1972, 547). Besonders geeignete Alkyl- und Arylmetallverbindungen sind n-Butyllithium, sec.-Butyllithium, tert.-Butyllithium, Methyllithium, Ethyllithium, n-Propyllithium, i-Propyllithium, Hexyllithium oder Phenyllithium. Es können aber auch alle anderen bekannten und hier nicht explizit genannten Alkylmetall-Verbindungen Verwendung finden. Obwohl die Alkyl- und Aryllithiumverbindungen bevorzugt sind, ist es ebenfalls möglich, z.B. Alkylkalium-Verbindungen, die vorzugsweise in situ aus Kalium-tert.-butanolat und Alkyllithium hergestellt werden, einzusetzen (z.B. Angew. Chem. Int. Ed. Engl. 12, 508 1973).

Als Metallierungsreagenzien für den Halogen-Metall-Austausch an Halogenaromaten werden die in den bekannten Verfahren eingesetzten Reagenzien verwendet. Bevorzugt sind dies Alkylmetallverbindungen wie z.B. n-Butyllithium, sec.-Butyllithium, tert.-Butyllithium, Methyllithium, Ethyllithium, n-Propyllithium, i-Propyllithium, Hexyllithium oder Phenyllithium, insbesondere n-Butyllithium, tert.-Butyllithium und Methyllithium. Es können aber auch alle anderen bekannten und hier nicht explizit genannten Alkylmetall-Verbindungen Verwendung finden, wie z.B. Alkylgrignard-Verbindungen.
Alkyllithiumverbindungen sind besonders bevorzugt. Bevorzugt ist das erfindungsgemäße Verfahren zur Herstellung von Aryllithiumverbindungen und deren Umsetzung mit Elektrophilen.

Vorzugsweise werden für das erfindungsgemäße Verfahren zur Herstellung von Arylmetallverbindungen durch Deprotonierung solche Aromaten eingesetzt, die ein Wasserstoffatom in ortho-Position zu einem Fluor oder einem Chloratom oder einer Trifluormethoxy-Gruppe aufweisen.

Für das erfindungsgemäße Verfahren zur Herstellung von Arylmetallverbindungen durch Halogen-Metall-Austausch werden bevorzugt solche Aromaten eingesetzt, die ein Brom- oder lodatom aufweisen, das bei der Metallierung ersetzt wird.

Als Elektrophile kommen bevorzugt die genannten Verbindungen der Formeln IIIa bisllln1in Betracht, vorzugsweise Cyclohexanone wie 4-Alkyl-, Alkoxy-, Alkenyl-, Alkenyloxy- oder Cycloalkylcyclohexanone oder 4-- Arylcyclohexanone, oder auch einfache aliphatische oder ungesättigte Ketone wie Aceton, Butanon, 2-Pentanon, Methylvinylketon, Diethylketon, 2-Hexanon, 3-Hexanon, Methylisobutylketon, Ethylisopropylketon, Diisopropylketon, Ethylisobutylketon, Isobutylisopropylketon, 2-Heptanon, 3-Heptanon, 4-Heptanon, Diisobutylketon, Methylvinylketon, Mesityloxid, Acetonylaceton, Benzylidenaceton, Dibenzalaceton, Pinacolon, Ethyl-tert.butylketon, Phenylaceton, Acetophenon, Benzophenon, Menthon, Phoron, Ketoglurarsäureester, Levulinsäureester, Diacetonacrylamid, Isomethadon, Normethadon, Pseudoionon, Ionon, Dipipanon, Norpipanon, Teprenon, Hygrin, Cuscohygrin, 3-Indolylaceton, Phenadoxon, Nabumeton oder Solanon, n-Alkylhalogenide mit 1 bis 16 C-Atomen, insbesondere n-Alkylbromide und -jodide, wie z.B. Methyl-, Ethyl-, Propyl-, Butyl-, Pentyl-, Hexyl-, Heptyl-, Octyl- oder Nonylbromid oder Methyl-, Ethyl-, Propyl-, Butyl-, Pentyl-, Hexyl-, Heptyl-, Octyl- oder Nonyljodid, n-Alkanale mit 2 bis 16 C-Atomen, insbesondere Acetaldehyd, Propionaldehyd, Butyraldehyd, Pentanal, Hexanal, Heptanal, Octanal oder Nonanal, Oxirane wie z.B. Oxiran, 2-Methyloxiran, 2-Ethyloxiran, 2-Propyloxiran, 2-Butyloxiran, 2-Pentyloxiran, 2-Hexyloxiran oder 2-Heptyloxiran.

Als Silylierungsmittel kommen die Verbindungen der Formeln IIIm in Betracht, vorzugsweise Trialkylsilylhalogenide wobei die Alkylgruppen geradkettig oder verzweigt sind und 1 bis 8 C-Atome aufweisen, insbesondere die Verbindungen der Formeln IIIm1 bis IIIm8.

Als Trialkylborate kommen üblicherweise Verbindungen der Formel B(OR³)₂(OR⁴), vorzugsweise B(OR³)₃, wobei R³ Methyl, Ethyl, Propyl, Butyl oder Isopropyl, insbesondere Methyl oder Isopropyl bedeutet, in Betracht.

Ein weiterer Vorteil des erfindungsgemäßen Verfahrens liegt darin, daß es jederzeit gefahrlos unterbrochen und später wieder aufgenommen werden kann, da zu jedem Zeitpunkt der Reaktion nur minimale Mengen der reaktiven intermediär auftretenden Arylmetallverbindung auftreten.

In einer bevorzugten Ausführungsform des erfindungsgemäßen Verfahrens wird die Deprotonierung eines Halogen- oder Trifluormethoxyaromaten in der Weise erreicht, daß man zunächst die Lösung des Aromaten mit 1 bis 100 mol%, vorzugsweise mit 1 bis 50 mol%, insbesondere mit 5 bis 20 mol% eines Amins, das durch Deprotonierung in ein Metallamid übergeführt werden kann, versetzt und diese Mischung in den Durchfluß-Reaktor in einem definierten Massen- oder Volumenstrom einleitet. Als Base dient vorzugsweise eine Lösung einer Alkyllithiumverbindung, die vorzugsweise in einem Massen- oder Volumenstrom in den Durchfluß-Reaktor eingeleitet wird, der ein molares Verhältnis der Base zum Aromaten von 1 zu 1 bis 1 zu 2, vorzugsweise von 1 zu 1 bis 1 zu 1.2 einhält. Hierbei wird aus dem zugesetzten Amin intermediär das entsprechende. Lithiumamid gebildet, das den Halogen- oder Trimethoxyaromaten deprotoniert und anschließend durch weiteres Lithiumalkan wieder in das Amid übergeführt wird. Nach einer Reaktionsstrecke, die für die vollständige Lithiierung des Aromaten ausreicht, wird eine Lösung des Elektrophils in einem Massen- oder Volumenstrom in den Durchfluß-Reaktor eingeleitet, der ein molares Verhältnis des Elektrophils zum metallierten Aromaten von 1 zu 1 bis 1 zu 0.5, vorzugsweise von 1 zu 1 bis 1 zu 0.8 einhält. Nach Durchlaufen einer weiteren Reaktionsstrecke, in der das Elektrophil mit der Arylmetallverbindung umgesetzt wird, verläßt der Produktstrom den Durchfluß-Reaktor.

In einer weiteren bevorzugten Ausführungsform des erfindungsgemäßen Verfahrens wird der Halogen-Metall-Austausch in der Weise erreicht, daß man den Halogenaromaten vorzugsweise in einer Lösung in einem definierten Massen- oder Volumenstrom in den Durchfluß-Reaktor einleitet.

Als Metallierungsreagenz dient vorzugsweise eine Lösung einer Alkyllithiumverbindung, die vorzugsweise in einem Massen- oder Volumenstrom in den Durchfluß-Reaktor eingeleitet wird, der ein molares Verhältnis des Metallierungsreagenz zum Aromaten von 1 zu 1 bis 1 zu 2, vorzugsweise von 1 zu 1 bis 1 zu 1.2 einhält.

Nach Durchlaufen einer Reaktionsstrecke, die für die vollständige Lithiierung des Aromaten ausreicht, wird eine Lösung des Elektrophils in einem Massen- oder Volumenstrom in den Durchfluß-Reaktor eingeleitet, der ein molares Verhältnis des Elektrophils zum metallierten Aromaten von 1 zu 1 bis 1 zu 0.5, vorzugsweise von 1 zu 1 bis 1 zu 0.8 einhält. Nach Durchlaufen einer weiteren Reaktionsstrecke in der das Elektrophil mit der Arylmetallverbindung umgesetzt wird, verläßt der Produktstrom den Durchfluß-Reaktor.

Die Aufarbeitung des Reaktionsgemisches und die Isolierung der Produkte erfolgt in üblicher Weise, z.B. indem man das Reaktionsgemisch, das bei der Verwendung von Ketonen, Aldehyden oder Epoxiden als Elektrophil die entsprechenden Lithiumalkoxide als Produkt enthält, auf Wasser und/oder Eis bzw. verdünnte Säure gießt und nach Abtrennen der wäßrigen Phase die Produkte durch Destillation oder Kristallisation in Form der jeweiligen Alkohole gewinnt.

Bei der Verwendung von Amiden als Elektrophile entstehen zunächst die entsprechenden metallierten Halbaminale, die nach Protonierung in die jeweiligen Aldehyde zerfallen.

Nach dem erfindungsgemäßen Verfahren ist es überraschend möglich, substituierte Aromaten, die wertvolle Zwischenprodukte beispielsweise für Flüssigkristalle, Hilfsstoffe, Pflanzenschutzmittel und Pharmaka sind, in gegenüber dem Stand der Technik einfacher Art, gefahrlos, in größerem Maßstab und in höheren Ausbeuten herzustellen.

Die folgende Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt.

"Übliche Aufarbeitung" bedeutet: man gibt gegebenenfalls Wasser hinzu, extrahiert mit Methylenchlorid, Diethylether oder Toluol, trennt ab, trocknet die organische Phase, dampft ein und reinigt das Produkt durch Destillation unter reduziertem Druck oder Kristallisation und/oder Chromatographie.

Folgende Abkürzungen werden verwendet:

| | |
|---|---|
| THF | Tetrahydrofuran |
| KOtBu | Kalium-tert.-butylat |
| RT | Raumtemperatur |
| MTBE | Methyl-tert.-butylether |

### Beispiel 1

1,1 kg/h einer 1 M Lösung von 2,3-Difluorphenetol mit 10 mol% 2,2,6,6-Tetramethylpiperidin wurden in einen Durchfluß-Reaktor eingeleitet und mit 0.4 kg/h einer 2.5 M Lösung von Hexyllithium in Hexan bei -35°C gemischt. Nach Durchlaufen der Reaktionsstrecke wurden 0.28 kg/h einer 4.7 M Lösung von Benzaldehyd in THF zugemischt. Nach Abschluß der Reaktion wurde das Produkt aufgefangen und wie üblich aufgearbeitet, wodurch 2,3-Difluor-4-ethoxy-α-phenylbenzylalkohol erhalten wurde. Der Umsatz bezogen auf die Ausgangsverbindung betrug 97 %.

Analog werden nach dem erfindungsgemäßen Verfahren unter Verwendung der entsprechenden Vorstufen folgende Verbindungen erhalten.

### Beispiele 2-21

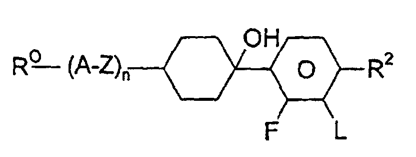

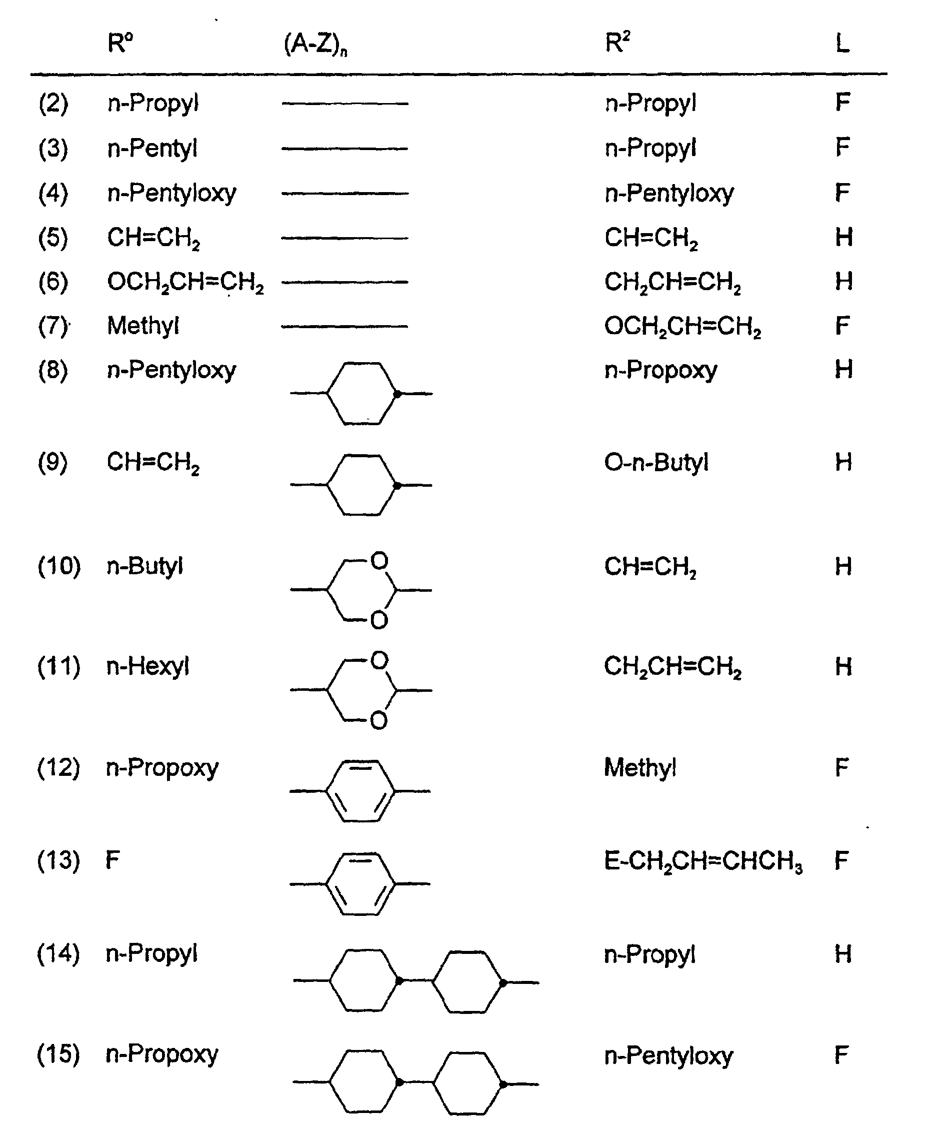

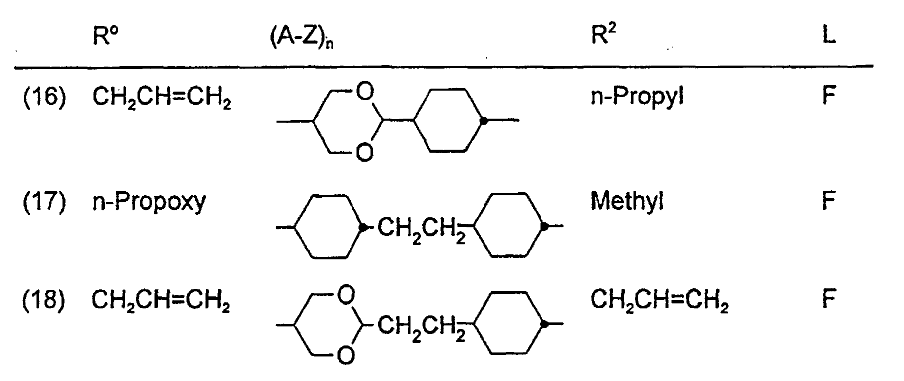

### Beispiele 19 - 31

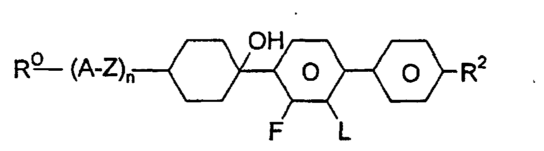

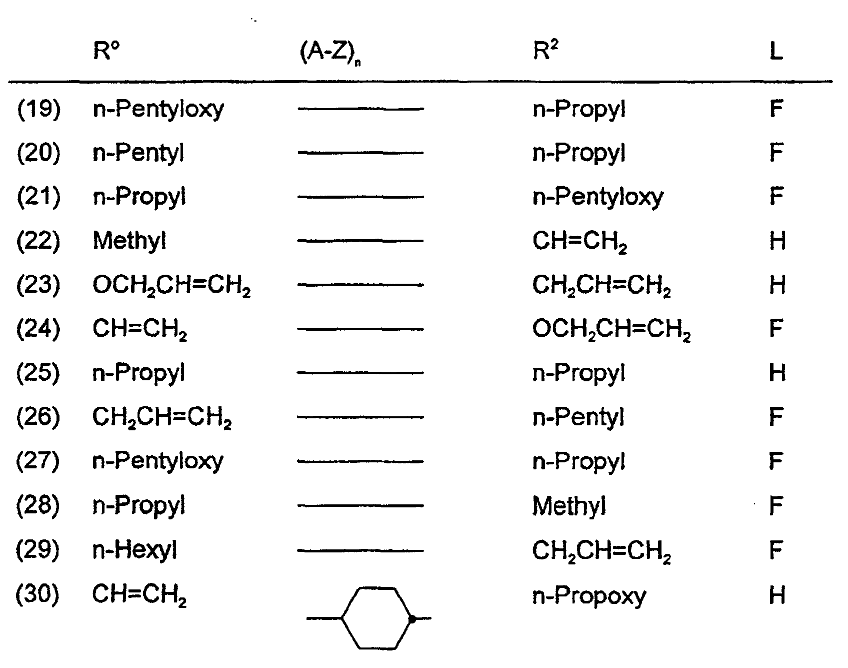

### Beispiele 31 - 42

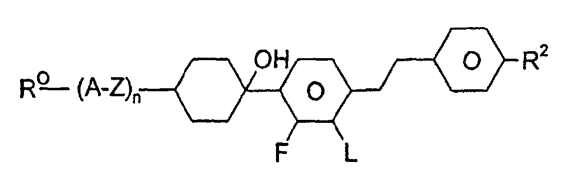

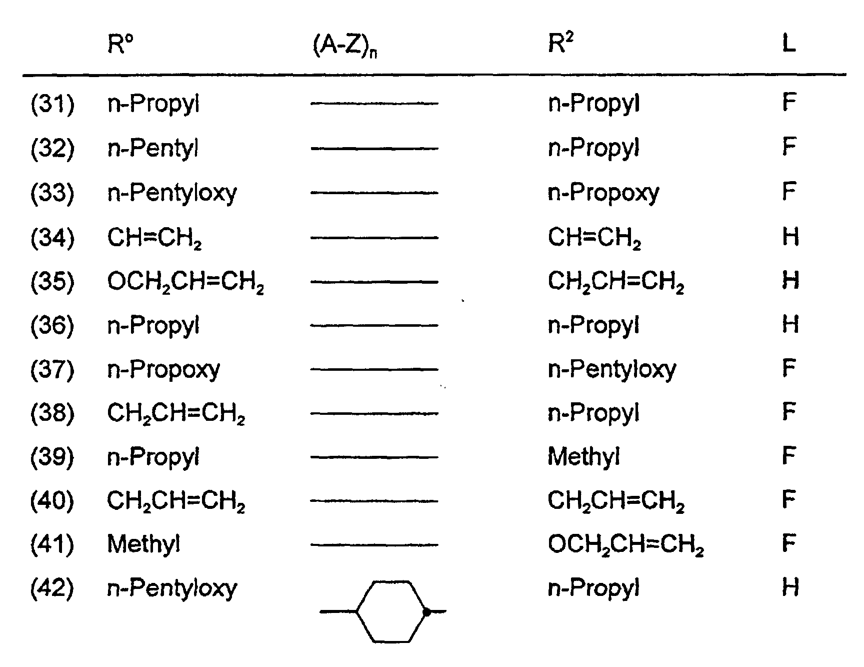

### Beispiele 43 - 55

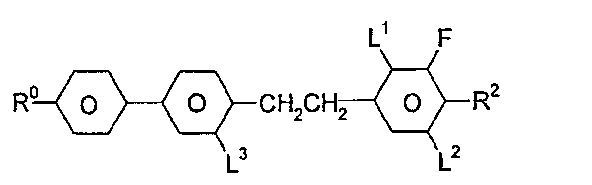

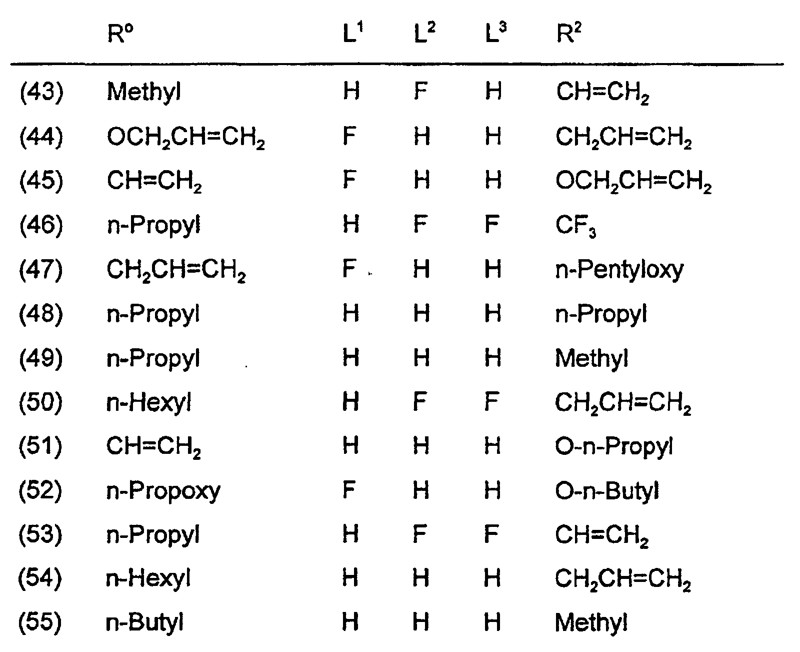

### Beispiele 56 - 72

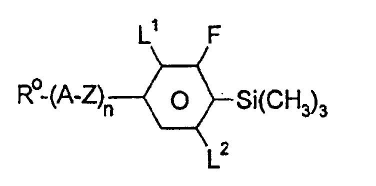

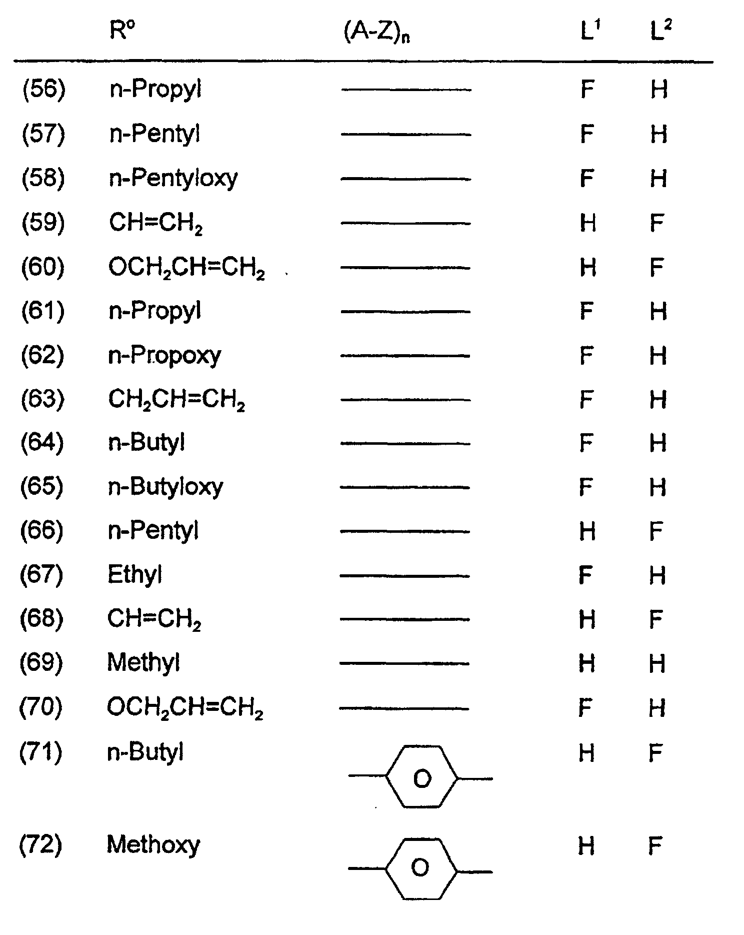

### Beispiele 73 - 78

- (73): 4-n-Propyl-2,6-difluorbenzolboronsäure-anhydrid
- (74): 4-(4-Propyl-)cyclohexyl)-2,3-difluorbenzolboronsäure-anhydrid
- (75): 4-Propy)-2,3-difluorbenzolboronsäure-anhydrid
- (76): 4-(4-Ethyl-)phenyl-2,3-difluorbenzolboronsäure-anhydrid
- (77): 4-(2-(4-(4-Propyl-)cyclohexyl-)cyclohexyl-)ethyl-2,3-difluorbenzolboronsäure-anhydrid
- (78): 4-Ethoxy-2,3-difluorphenylboronsäure-anhydrid

### Beispiel 79

3,5-Difluor-(4-propylcyclohexyl)-benzol und 2mol% 2,2,6,6-Tetramethylpiperidin wurden mit n-Hexyllithium im Rohrreaktor bei -50 °C gemischt und nach ca. 10 Min. Verweildauer mit N-Formylpiperidin zur Reaktion gebracht. Der Umsatz betrug > 98%.

## Patentansprüche

1. Verfahren zur Herstellung von Arylmetallverbindungen durch Deprotonierung von Aromaten, die ein Wasserstoffatom in ortho-Position zu einem Halogenatom oder einer Trifluormethoxy-Gruppe aufweisen, mit einer geeigneten Base oder durch Halogen-Metall-Austausch von Halogenaromaten mit einem geeigneten Metallierungsreagenz und deren Umsetzung mit Elektrophilen, **dadurch gekennzeichnet, daß** man die Arylmetallverbindungen in einem Durchfluß-Reaktor herstellt.

2. Verfahren nach Anspruch 1 zur Herstellung von ortho-Halogenarylmetallverbindungen und deren Umsetzung mit Elektrophilen.

3. Verfahren nach Anspruch 1 oder 2, **dadurch gekennzeichnet, daß** als Elektrophil ein Keton, ein Carbonsäureamid oder ein Aldehyd vewendet wird.

4. Verfahren gemäß Anspruch 1 zur Herstellung von Arylmetallverbindungen durch Deprotonierung von Aromaten, die ein Wasserstoffatom in ortho-Position zu einem Halogenatom oder einer Trifluormethoxy-Gruppe aufweisen, mit einer geeigneten Base oder durch Halogen-Metall-Austausch von Halogenaromaten mit einem geeigneten Metallierungsreagenz und deren Umsetzung mit entsprechenden Elektrophilen zu den Verbindungen der Formel I, 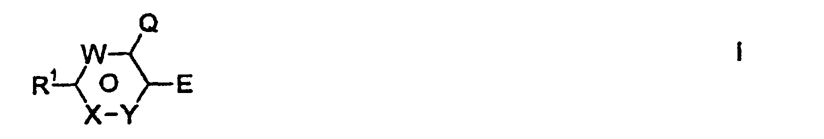 wobei
Q F, Cl oder Br,
R¹ H, F, Cl, Br, CN, Alkyl, Alkenyl, Alkoxy, Alkenyloxy mit jeweils bis zu 18 C-Atomen oder eine mesogene Gruppe,
W, X und Y jeweils unabhängig voneinander N, CH, CCN oder CF,
und
E 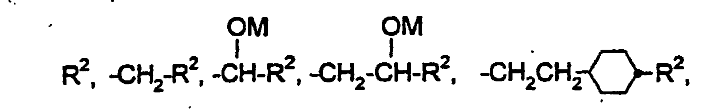 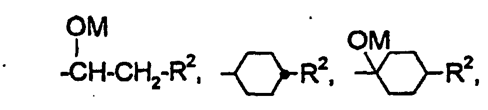 BX₂ oder SI, 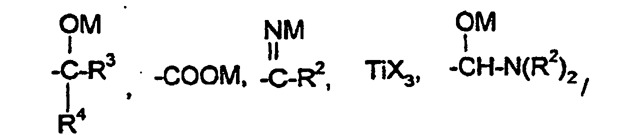 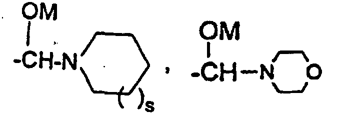 oder ZnX
worin
R² Alkyl, Alkoxy, Alkenyl, Alkenyloxy mit 1 bis 15 C-Atomen oder einen der Gruppe R¹ entsprechenden mesogenen Rest,
M Li, K, MgBr, MgCl oder Mgl,
S 0 oder 1,
BX₂ einen Trioxatriborinonrest der Formel 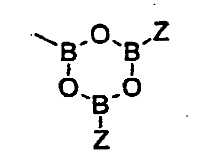 worin Z für 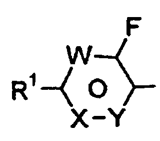 steht oder eine Gruppe der Formel
-B(OR³)(OR⁴),
R³und R⁴ H, Alkyl, Alkenyl oder Cycloalkyl mit jeweils bis zu 10 C-Atomen oder zusammengenommen eine Alkylendiylgruppe der Formel-(CH₂)ₙ- oder -CH₂CHR⁵-CH₂-, worin n 2, 3 oder 4 ist und R⁵ Alkyl, Alkoxy oder Alkenyl mit bis zu 18 C-Atomen oder einen der Formel II entsprechenden mesogenen Rest, und
SI eine Trihydrocarbylsilylgruppe der Formel -Si(R⁶)₃ worin R⁶ jeweils unabhängig voneinander aliphatischer, cycloaliphatischer, araliphatischer oder aromatischer Rest ist,
TiX₃ einen Rest der Formel TiBr₃, TiCl₃ oder Ti(OR₃)₃
ZnX einen Rest der Formel ZnBr, ZnCl, ZnR³ oder ZnOR³
bedeuten, **dadurch gekennzeichnet, daß** man die ortho-Halogenarylmetallverbindungen in einem Durchfluß-Reaktor herstellt.

5. Verfahren nach Anspruch 4, **dadurch gekennzeichnet, daß** R¹ eine mesogene Gruppe der Formel 11 bedeutet, wobei
R^{o}-A¹-Z¹-(A²-Z²)-ₘ II
R^{o} F, CN, einen unsubstituierten oder einen einfach durch CN, Halogen oder CF₃ substituierten Alkyl- oder Alkenylrest mit bis zu 15 C-Atomen, wobei in diesen Resten auch eine oder mehrere CH₂-Gruppen jeweils unabhängig voneinander durch -S-, -O-, -CO-, -CO-O-, -O-CO- oder -O-CO-O- so ersetzt sein können, daß S- und/oder O-Atome nicht direkt miteinander verknüpft sind,
Z¹ und Z² jeweils unabhängig voneinander -CH₂CH₂-, -C≡C-, -CH₂O-, -OCH₂-, -CO-O-, -O-CO-, -CH=N-, -N=CH-, -CH₂S-, -SCH₂-, eine Einfachbindung oder eine Alkylengruppe mit 3 bis 6 C-Atomen, worin auch eine CH₂-Gruppe durch -O-, -CO-O-, -O-CO-, -CHHalogen- oder -CHCN- ersetzt sein kann,
und
A¹ und A² jeweils unabhängig voneinander einen
a) trans-1,4-Cyclohexylenrest, worin auch eine oder mehrere nicht benachbarte CH₂-Gruppen durch -O- und/oder -S- ersetzt sein können,
b) 1,4-Phenylenrest, worin auch eine oder zwei CH-Gruppen durch N ersetzt sein können,
c) Rest aus der Gruppe 1,3-Cyclobutylen, 1,3-Bicyclo(1,1,1)pentylen, 1,4-Cyclohexenylen, 1,4-Bicyclo(2,2,2)octylen, Piperidin-1,4-diyl, Naphthalin-2,6-diyl, Decahydronaphthalin-2,6-diyl und 1,2,3,4-Tetrahydronaphthalin-2,6-diyl
wobei die Reste (a) und (b) durch CN oder F substituiert sein können, und
m 0,1 oder 2
bedeuten.

6. Verfahren nach einem der Ansprüche 1 bis 5, **dadurch gekennzeichnet, daß** zur Deprotonierung der Halogen-oder Trifluormethoxyaromaten Metallamide, Alkyl- oder Arylmetallverbindungen eingesetzt werden.

7. Verfahren nach Anspruch 6, **dadurch gekennzeichnet, daß** die Metallamide in Gegenwart des zu metallierenden Aromaten durch Umsetzung eines entsprechenden Amins mit einer Alkylmetallverbindung hergestellt werden.

8. Verfahren nach Anspruch 7, **dadurch gekennzeichnet, daß** katalytische Mengen des Amins eingesetzt werden.

9. Verfahren nach einem der Ansprüche 1 bis 5, **dadurch gekennzeichnet, daß** für den Halogen-Metall-Austausch Alkylmetallverbindungen verwendet werden.

10. Verfahren nach einem der vorhergehenden Ansprüche, wobei man die Ausgangsstoffe bei Temperaturen von -40 °C bis +40 °C in einem Durchfluß-Reaktor zur Reaktion bringt.

11. Verfahren nach einem der vorhergehenden Ansprüche, **dadurch gekennzeichnet, daß** man die Ausgangsstoffe in einem inerten Lösungsmittel gelöst in den Durchfluß-Reaktor einbringt.

12. Verfahren nach einem der vorhergehenden Ansprüche zur Herstellung von Aryllithiumverbindungen und deren Umsetzung mit Elektrophilen.

## Claims

1. Process for the preparation of aryl metal compounds by deprotonation of aromatic compounds having a hydrogen atom in the ortho-position to a halogen atom or a trifluoromethoxy group, using a suitable base or by halogen-metal exchange of halogenated aromatic compounds using a suitable metallation reagent, and reaction thereof with electrophiles, **characterized in that** the aryl metal compounds are prepared in a flow reactor.

2. Process according to Claim 1 for the preparation of ortho-haloaryl metal compounds and reaction thereof with electrophiles.

3. Process according to Claim 1 or 2, **characterized in that** the electrophile used is a ketone, a carboxamide or an aldehyde.

4. Process according to Claim 1 for the preparation of aryl metal compounds by deprotonation of aromatic compounds having a hydrogen atom in the ortho-position to a halogen atom or a trifluoromethoxy group, using a suitable base or by halogen-metal exchange of halogenated aromatic compounds using a suitable metallation reagent, and reaction thereof with corresponding electrophiles to give the compounds of the formula I 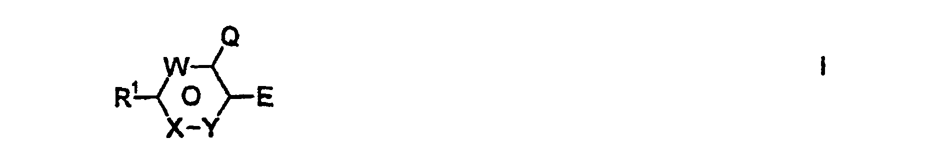 where
Q is F, Cl or Br,
R¹ is H, F, Cl, Br, CN, alkyl, alkenyl, alkoxy or alkenyloxy, each having up to 18 carbon atoms or a mesogenic group,
W, X and Y are each, independently of one another, N, CH, CCN or CF,
and
E 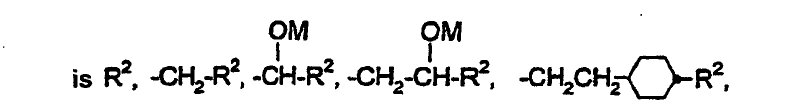 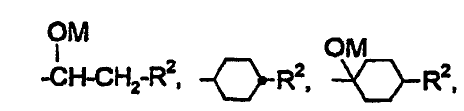 BX₂ or SI, 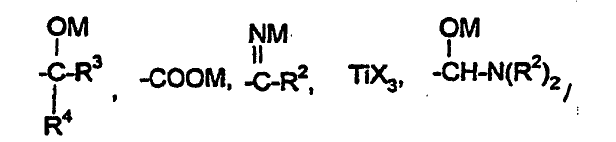 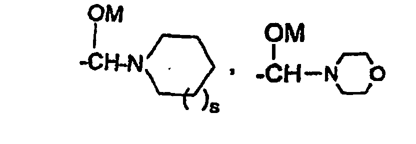 or ZnX
in which
R² is alkyl, alkoxy, alkenyl, alkenyloxy having from 1 to 15 carbon atoms or a mesogenic radical corresponding to the group R¹,
M is Li, K, MgBr, MgCl or Mgl,
S is 0 or 1,
BX₂ is a trioxatriborinone radical of the formula 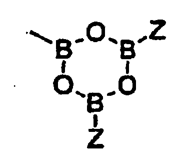 in which Z is 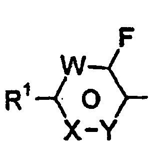 or a group of the formula
-B(OR³)(OR⁴),
R³ and R⁴ are H, alkyl, alkenyl or cycloalkyl, each having up to 10 carbon atoms, or taken together are an alkylenediyl group of the formula -(CH₂)ₙ- or -CH₂CHR⁵-CH₂-, in which n is 2, 3 or 4, and R⁵ is alkyl, alkoxy or alkenyl having up to 18 carbon atoms or a mesogenic radical conforming to the formula II, and
SI is a trihydrocarbylsilyl group of the formula -Si(R⁶)₃, in which each R⁶, independently of one another, is an aliphatic, cycloaliphatic, araliphatic or aromatic radical,
TiX₃ is a radical of the formula TiBr₃, TiCl₃ or Ti(OR₃)₃,
ZnX is a radical of the formula ZnBr, ZnCl, ZnR³ or ZnOR³,
**characterized in that** the ortho-haloaryl metal compounds are prepared in a flow reactor.

5. Process according to Claim 4, **characterized in that** R¹ is a mesogenic group of the formula II, where
R^{o}-A¹-Z¹-(A²-Z²)-ₘ II
R^{o} is F, CN, an alkyl or alkenyl radical having up to 15 carbon atoms which is unsubstituted or monosubstituted by CN, halogen or CF₃, where, in addition, one or more CH₂ groups in these radicals may each, independently of one another, be replaced by -S-, -O-, -CO-, -CO-O-, - O-CO- or -O-CO-O- in such a way that S and/or O atoms are not linked directly to one another,
Z¹ and Z² are each, independently of one another, -CH₂CH₂-, -C≡C-, -CH₂O-, -OCH₂-, -CO-O-, -O-CO-, -CH=N-, - N=CH-, -CH₂S-, -SCH₂-, a single bond or an alkylene group having from 3 to 6 carbon atoms, in which, in addition, one CH₂ group may be replaced by -O-, - CO-O-, -O-CO-, -CH-halogen- or -CHCN-,
and
A¹ and A² are each, independently of one another, a
a) trans-1,4-cyclohexylene radical, in which, in addition, one or more non-adjacent CH₂ groups may be replaced by -O- and/or -S-,
b) 1,4-phenylene radical, in which, in addition, one or two CH groups may be replaced by N,
c) radical from the group consisting of 1,3-cyclobutylene, 1,3-bicyclo(1,1,1)pentylene, 1,4-cyclohexenylene, 1,4-bicyclo(2,2,2)octylene, piperidine-1,4-diyl, naphthalene-2,6-diyl, decahydronaphthalene-2,6-diyl and 1,2,3,4-tetrahydronaphthalene-2,6-diyl,
where the radicals (a) and (b) may be substituted by CN or F, and
m is 0, 1 or 2.

6. Process according to one of Claims 1 to 5, **characterized in that** the deprotonation of the halo- or trifluoromethoxyaromatic compounds is carried out using metal amides, alkyl- or aryl metal compounds.

7. Process according to Claim 6, **characterized in that** the metal amides are prepared in the presence of the aromatic compound to be metallated by reaction of a corresponding amine with an alkyl metal compound.

8. Process according to Claim 7, **characterized in that** catalytic amounts of the amine are employed.

9. Process according to one of Claims 1 to 5, **characterized in that** the halogen-metal exchange is carried out using alkyl metal compounds.

10. Process according to one of the preceding claims, in which the starting materials are reacted in a flow reactor at temperatures from - 40°C to +40°C.

11. Process according to one of the preceding claims, **characterized in that** the starting materials are introduced into the flow reactor dissolved in an inert solvent.

12. Process according to one of the preceding claims for the preparation of aryllithium compounds and reaction thereof with electrophiles.

## Revendications

1. Procédé de fabrication de liaisons aryle-métal par déprotonation d'aromates qui présentent un atome d'hydrogène en ortho-position par rapport à un atome d'halogène ou un groupe trifluorméthoxy, avec une base appropriée ou par un échange métal-halogène d'aromates halogénés avec un réactif adapté à la métallisation et leur réaction avec des électrophiles, **caractérisé en ce qu'**on fabrique les liaisons aryle-métal dans un réacteur à débit.

2. Procédé de fabrication de liaisons aryle-métal ortho- halogénées selon la revendication 1 et leur réaction avec des électrophiles.

3. Procédé selon la revendication 1 ou 2, **caractérisé en ce que**, pour l'électrophile, on utilise une cétone, un amide d'acide carboxylique ou un aldéhyde.

4. Procédé de fabrication de liaisons aryle-métal selon la revendication 1 par déprotonation d'aromates qui présentent un atome d'hydrogène en ortho-position par rapport à un atome d'halogène ou un groupe trifluorméthoxy, avec une base appropriée ou par un échange métal-halogène d'aromates halogénés avec un réactif adapté à la métallisation et leur réaction avec des électrophiles correspondant aux composés de formule I, 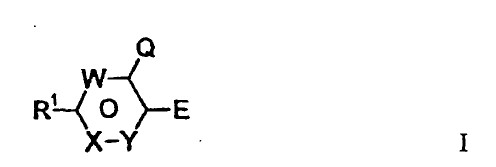 dans laquelle
Q représente F, Cl ou Br,
R¹ représente H, F, Cl, Br, CN, un groupe alkyle, alkényle, alkoxy, alkényloxy avec respectivement jusqu'à 18 atomes de carbone ou un groupe mésogène,
W, X et Y représentent respectivement indépendamment les uns des autres N, CH, CCN ou CF,
et
E 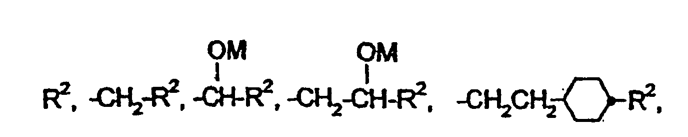 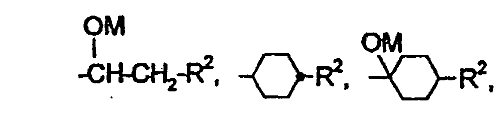 BX₂ oder SI, 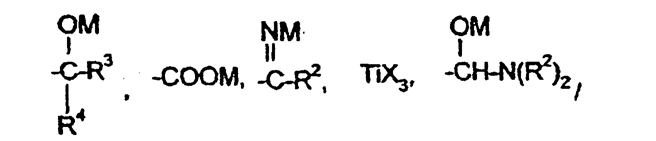 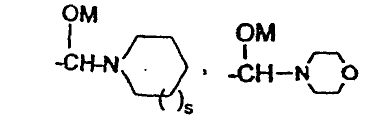 ou ZnX
où
R² représente un groupe alkyle, alkoxy, alkényle, alkényloxy avec 1 à 15 atomes de carbone où un reste mésogène correspondant au groupe R¹;
M représente Li, K, MgBr, MgCl ou Mgl,
S représente 0 ou 1
BX₂ représente un reste de trioxatriborinon de formule 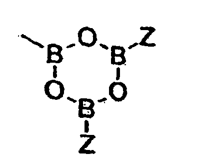 où Z est 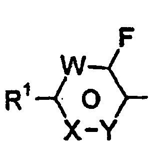 ou un groupe de formule
-B(OR³)(OR⁴),
R³ et R⁴ représentent H, un groupe alkyle, alkényle ou cycloalkyle ayant respectivement jusqu'à 10 atomes de carbone ou, réunis, un groupe alkyle-diyl de formule -(CH₂)ₘ- ou -CH₂CHR⁵-CH₂-, où n est 2, 3 ou 4 et R⁵ est un groupe alkyle, alkoxy ou alkényle ayant jusqu'à 18 atomes de carbone ou un reste mésogène correspondant à la formule II, et
SI représente un groupe trihydrocarbylsilyl de formule -Si(R⁶)₃ où R⁶ est respectivement un reste aliphatique, cycloaliphatique, araliphatique ou aromatique respectivement indépendamment les uns des autres,
TiX₃ représente un reste de formule TiBr₃, TiCl₃ ou Ti(OR₃)₃,
ZnX représente un reste de formule ZnBr, ZnCl, ZnR³ ou ZnOR³
**caractérisé en ce qu'**on fabrique les liaisons aryle-métal ortho- halogénées dans un réacteur à débit.

5. Procédé selon la revendication 4, **caractérisé en ce que** R¹ représente un groupe mésogène de formule II, dans laquelle
R⁰-A¹-Z¹-(A²-Z²)-ₘ II
R^{o} représente F, CN, un reste d'alkyle ou d'alkényle non substitué ou simplement substitué par CN, halogène ou CF₃ ayant jusqu'à 15 atomes de carbone, où, dans ces restes, un ou plusieurs groupes CH₂ peuvent être remplacés par -S-, -O-, -CO-, -CO-O-, -O-CO- ou -O-CO-O-respectivement indépendamment les uns des autres de sorte que les atomes S- et/ou O- ne soient pas liés directement ensemble,
Z¹ et Z² représentent une liaison simple ou un groupe alkyle ayant de 3 à 6 atomes de carbone, -CH₂CH₂-, -C=C-, -CH₂O-, -OCH₂-, -CO-O-, -O-CO-, - CH=N-, -N=CH-, -CH₂S-, -SCH₂- respectivement indépendamment les uns des autres, dans lequel un groupe CH₂- peut également être remplacé par -O-, -CO-O-, -O-CO-, -CH halogéné- ou -CHCN-,
et
A¹ et A² représentent respectivement indépendamment les uns des autres
a) un reste trans-1,4-cyclohéxyle, dans lequel un ou plusieurs groupes CH₂- non voisins peuvent être remplacés par ―O- et/ou ―S-,
b) un reste 1,4-phényle dans lequel un ou deux groupes CH peuvent également être remplacés par N,
c) un reste choisi parmi les groupes 1,3-cyclobutylène, 1,3-bicyclo(1,1,1)pentylène, 1,4-cyclohéxénylène, 1,4-bicyclo(2,2,2)octylène, pipéridine-1,4-diyl, naphtaline-2,6-diyl, décahydronaphtaline-2,6-diyl et 1,2,3,4,-têtrahydronaphtaline-2,6-diyl,
dans lequel les restes (a) et (b) peuvent être substitués par CN ou F,
et
m représente 0, 1 ou 2.

6. Procédé selon une des revendications 1 à 5, **caractérisé en ce que**, pour déprotoner des aromates halogénées- ou trifluorméthoxy-, on peut utiliser l'amide métal ou des liaisons métal-alkyle ou -aryle.

7. Procédé selon la revendication 6, **caractérisé en ce que** les amides métal sont fabriqués en présence de l'aromate à métalliser par la réaction d'une amine correspondante avec une liaison alkyle-métal.

8. Procédé selon la revendication 7, **caractérisé en ce qu'**on utilise des quantités catalytiques de l'amine.

9. Procédé selon une des revendications 1 à 5, **caractérisé en ce que**, pour l'échange métal-halogène, on utilise des liaisons alkyle-métal.

10. Procédé selon une des revendications précédentes, dans lequel on porte les matières initiales pour une réaction à des températures de -40°C à +40°C dans un réacteur à débit.

11. Procédé selon une des revendications précédentes, **caractérisé en ce qu'**on introduit les matières initiales dans un solvant inerte dissout dans un réacteur à débit.

12. Procédé selon une des revendications précédentes pour fabriquer des liaisons aryle-lithium et leur réaction avec des électrophiles.
